(19) Europäisches Patentamt
European Patent Office
Office européen des brevets

(11) **EP 3 502 153 A1**

(12) **EUROPEAN PATENT APPLICATION**

(43) Date of publication:
**26.06.2019 Bulletin 2019/26**

(21) Application number: **17208574.8**

(22) Date of filing: **19.12.2017**

(51) Int Cl.:
***C08F 293/00*** *(2006.01)*
***C08F 4/80*** *(2006.01)*
***C08F 4/04*** *(2006.01)*
***C08F 210/02*** *(2006.01)*
***C08F 218/08*** *(2006.01)*
***C08F 220/56*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Université de Liège**
**4000 Liège (BE)**

(72) Inventors:
- **DETREMBLEUR, Christophe**
  **4130 Esneux (BE)**
- **DEMARTEAU, Jérémy**
  **4650 Herve (BE)**
- **DEBUIGNE, Antoine**
  **5150 Floreffe (BE)**
- **KERMAGORET, Anthony**
  **13004 Marseille (FR)**

(74) Representative: **DenK iP**
**Leuvensesteenweg 203**
**3190 Boortmeerbeek (BE)**

# (54) BLOCK COPOLYMERIZATION OF ETHYLENE BY COBALT-MEDIATED RADICAL POLYMERIZATION

(57) Preparation of a block copolymer comprising a polyethylene block and a block formed of the polymerization of one or more vinyl monomers, at least 50 mol% of which being selected from the list consisting of ethylene, vinyl esters, non-conjugated N-vinyl monomers, acrylonitrile, (meth)acrylates and (meth)acrylamides, at least one of said one or more vinyl monomers not being ethylene, the process comprising:
a. Polymerizing ethylene or the one or more vinyl monomers in presence of an organic cobalt complex, thereby forming a macroinitiator,
b. Contacting the macroinitiator with either
i. The one or more vinyl monomers, if ethylene was polymerized in step a, or
ii. ethylene, if the one or more vinyl monomers were polymerized in step a,
thereby forming a second polymer block, and thereby forming the block copolymer, wherein forming the polyethylene block is performed under a pressure of at least 300 bar.

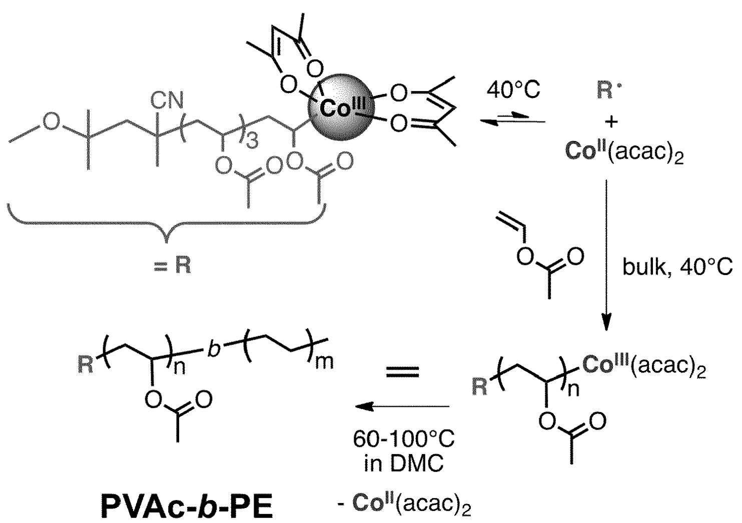


**FIG. 1**

EP 3 502 153 A1

## Description

### Technical field of the invention

The present invention relates to the field of organometallic-mediated radical polymerization, and more in particular to its application in the manufacture of block copolymers comprising a polyethylene block.

### Background of the invention

Polyethylene (PE) is the most important polymer produced world-wide (>80MT/year). It finds numerous applications from packaging to high added value products. It is produced from inexpensive ethylene, an extremely attractive monomer with a feedstock that can be independent from oil production and obtained by biological resources.

PE is industrially obtained through catalytic coordination insertion (Ziegler-Natta or Phillips catalysis) to produce high density polyethylene (HDPE) that is composed of linear chains. PE can also be synthesized by free radical polymerization (FRP) under harsh experimental conditions (250-3000 bar and 150-375 °C) that yields low density PE that is a branched polymer (see for example S. L. Aggarwal and O. J. Sweeting, Chem. Rev., 1957, 57, 665-742 or M. Ghiass and R. A. Hutchinson, Polym. React. Eng., 2003, 11, 989-1015).

FRP is a process by which a polymer is formed from the successive addition of vinyl monomeric units through a free radical mechanism. Nevertheless, FRP also involves termination and chain transfer processes making the control of the molecular architecture of the polymer almost impossible and its macroscopic properties very difficult to tailor. This drawback is particularly marked for the polymerization of the so called 'less activated monomers' (LAMs), including ethylene, due to the high reactivity of the propagating radical resulting from the lack of stabilizing groups.

Research efforts have already been made to overcome these limitations leading to controlled radical polymerization (CRP) methods. Controlling the growth of the chains during a polymerization process enables the fine-tuning of the molar mass and dispersity of the polymer, but also its structure by allowing the preparation of block copolymer structures for instance. In particular, the cobalt-mediated radical polymerization (CMRP), based on the temporary deactivation of the growing chains by a cobalt complex, was proved efficient for controlling the polymerization of a series of LAMs such as vinyl esters, N-vinyl amides, and N-vinyl imidazolium, to name a few (see for example A. Debuigne, C. Jerome and C. Detrembleur, Polymer, 2017, 115, 285-307). Cobalt bis-(acetylacetonate), also referred to as "*Co(acac)*$_2$", was particularly efficient as controlling agent. The CMRP can be initiated either by the use of conventional free radical initiators, like 2,2'-azobis (4-methoxy-2.4-dimethyl valeronitrile) (V-70) or redox initiating systems, in the presence of a cobalt (II) complex or from preformed alkyl-cobalt(III) complexes. In all these cases, polymerizations were carried out at rather low temperature (0 °C - 40 °C) and the sequential CMRP of LAMs gave access to a range of well-defined block copolymers, not comprising a homopolyethylene block.

Recently, the statistical copolymerization of vinyl acetate (VAc) with ethylene (E) was controlled with $Co(acac)_2$ following quite similar conditions described for VAc, i.e. moderate temperature (40 °C) and no additional solvent (polymerization in bulk). Ethylene/vinyl acetate statistical copolymers (EVAs) with precise molar mass and low dispersity (Đ) were produced accordingly and the composition of the copolymers was modulated by tuning the working ethylene pressure, i.e. from 10 to 55 mol% ethylene at 10 and 50 bar, respectively (A. Kermagoret, A. Debuigne, C. Jérôme and C. Detrembleur, Nat. Chem., 2014, 6, 179-187). This controlled statistical copolymerization was extended to the preparation of well-defined ethylene/acrylonitrile and ethylene/(N-methyl vinylacetamide) statistical copolymers. EVA-based copolymers presenting an ethylene poor block and an ethylene rich block were also prepared by adjusting the ethylene pressure during the copolymerization. Another study reported the successful preparation of PVAc-b-EVA block copolymers (J. Demarteau, A. Kermagoret, C. Jerome, C. Detrembleur and A. Debuigne, ACS Symp. Ser., 2015, 1188, 47-61).

However, the controlled sequential polymerization of ethylene and other vinyl monomers, LAMs in particular, for the synthesis of block copolymers presenting a 'pure' polyethylene (PE) block, i.e. a polymer block composed of ethylene repeating units only that may be branched or not and that is obtained from polymerization of ethylene, has never been reported so far by CMRP, or by any other CRP method. These unprecedented block copolymers would considerably broaden the scope of the applications of ethylene-containing copolymers. As compared to the controlled statistical copolymerization of ethylene with other monomers, especially LAMs, the synthesis of block copolymers containing a PE segment presents various obstacles. The synthesis of block copolymers presenting an homoPE sequence implies one step during which the ethylene is homopolymerized in the presence of the cobalt complex, which is challenging because this process only implies rather stable Co-PE bonds which are difficult to activate due to the absence of any radical stabilizing substituent on ethylene. In absence of comonomer, the solubility of the PE segment is expected to be very low in its monomer leading to early precipitation of the (co)polymer. Therefore, in contrast to the EVA, the synthesis of PE segment cannot be carried out under known conditions. Moreover, as compared to the copolymerization of ethylene with other vinyl monomers which can be carried out at moderate pressure, the homopolymerization of ethylene often requires much higher pressure of ethylene which can also affect the course of the CMRP.

## Summary of the invention

It is an object of the present invention to provide good methods for manufacturing block copolymers comprising a polyethylene block and to provide the block copolymers obtained thereby.

The above objective is accomplished by methods according to embodiments of the present invention.

In a first aspect, the present invention relates to a process for the preparation of a block copolymer comprising a polyethylene block and a block formed of the polymerization of one or more vinyl monomers, at least 50 mol% of which being selected from the list consisting of ethylene, vinyl esters, non-conjugated N-vinyl monomers, acrylonitrile, (meth)acrylates and (meth)acrylamides, at least one of said one or more vinyl monomers not being ethylene, the process comprising:

a. Polymerizing either ethylene as sole monomer or the one or more vinyl monomers in presence of an organic cobalt complex and optionally an initiator for radical polymerization, thereby forming a macroinitiator comprising a first polymer block formed either of polyethylene or of the polymerized one or more vinyl monomers,

b. Contacting the macroinitiator with either

i. The one or more vinyl monomers, if ethylene was polymerized in step a, or

ii. ethylene, if the one or more vinyl monomers were polymerized in step a,

thereby forming a second polymer block formed either of the polymerized one or more vinyl monomers or of polyethylene, attached to the first polymer block, and thereby forming the block copolymer, wherein forming the polyethylene block is performed under a pressure of at least 300 bar.

In a second aspect, the present invention relates to a block copolymer obtainable by the process of the first aspect. In particular, it may relate to a block copolymer comprising a polyethylene block attached to a block obtained from the polymerisation of one or more vinyl monomers, selected from the list consisting of ethylene, vinyl esters, N-vinyl amides, N-vinyl imidazolium salts, acrylonitrile, (meth)acrylates, (meth)acrylamides, and hydrolysis products thereof, at least one of the one or more vinyl monomers not being ethylene.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawing, which illustrate, by way of example, the principles of the invention. This description is given for the sake of example only, without limiting the scope of the invention. The reference figures quoted below refer to the attached drawings.

## Brief description of the drawings

Fig. 1 is a reaction scheme corresponding to examples 1 and 5 of the present invention.

Fig. 2 is a SEC chromatogram for example 1.

Fig. 3 is a DSC analysis for example 1.

Fig. 4 is a $^1$H-NMR analysis for example 2.

Fig. 5 is a DSC analysis for example 2.

Fig. 6 is a TGA analysis for example 2.

Fig. 7 is a DSC analysis for example 3.

Fig. 8 is a SEC analysis for example 4.

Fig. 9 is a $^1$H-NMR analysis for example 4.

## Description of illustrative embodiments

The present invention will be described with respect to particular embodiments and with reference to certain drawings but the invention is not limited thereto but only by the claims. The drawings described are only schematic and are non-limiting.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "*comprising*", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof.

Reference throughout this specification to "*one embodiment*" or "*an embodiment*" means that a particular feature, structure or characteristic described in connection with the embodiment is included in at least one embodiment of the present invention. Thus, appearances of the phrases "*in one embodiment*" or "*in an embodiment*" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention.

As used herein and unless provided otherwise, the term block copolymer refers to a polymer formed of at least two polymers, differing in chemical nature, and attached to each other. Each polymer composing the block copolymer is called a block. Each block can either be a homopolymer or a copolymer selected from statistical copolymers and gradient copolymers.

As used herein and unless provided otherwise, the term vinyl monomer refers to a monomer comprising at least one vinyl group.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

In a first aspect, the present invention relates to a process for the preparation of a block copolymer.

There is no lower limit to the block copolymer molecular mass achievable by the process of the present invention since it is always possible to interrupt the polymerization process early. It is however an advantage of embodiments of the present invention that they permit the formation of block copolymers having an absolute number average molecular mass (absolute Mn) of at least 5000 g/mol, or even at least 10000 g/mol. Absolute number average molecular mass can be determined by techniques well known to the person skilled in the art. It can for instance be determined by $^1$H-NMR by integrating a signal specific to an end group of the block copolymer and comparing it with signals specific for each block.

In embodiments, the process of the present invention may permit the formation of a block copolymer having a polydispersity of less than 1.5. This can in some instance be determined by size exclusion chromatography (SEC). It was for instance be determined for the block copolymer of examples 1, 4 and 5. SEC is however often not usable for analysing the polydispersity of the block copolymers of some embodiments of the present invention for various reasons. One reason is that it is often not possible to find a solvent which is able to solubilize both block types. This is especially

the case when the vinyl block is a polar block. Another reason is that when a common solvent exists, it is often only dissolving both blocks at a temperature too high for the SEC. Furthermore, even when a common solvent exists and can be used at a temperature compatible with the column, the elution of the block copolymer in the SEC column is often a problem because the polar block sticks to the column. When SEC can be done, for instance with the block copolymer of example 1, most typically, size exclusion chromatography, calibrated with polystyrene (PS) standards, in a solvent and at a temperature suitable for solubilizing as much of the copolymer as possible, will be used. In the present disclosure, and unless provided otherwise, when SEC is mentioned, it is understood that a calibration with polystyrene (PS) standards, in a solvent and at a temperature suitable for solubilizing as much of the copolymer as possible, can for instance be used. A typical solvent is tetrahydrofurane (THF) but the choice of the solvent is better determined by the skilled person by trial and error. For instance, when the PE block becomes too large for being adequately soluble in THF, 1, 2, 4-trichlorobenzene or tetrachloroethylene can be used. Room temperature is typically preferred but a higher temperature is often necessary to dissolve the larger chains. SEC can of course also be used to determine an average molecular mass, e.g. relative to a PS standard.

In embodiments, the process of the present invention permits the formation of a block copolymer having a bimodal distribution. The modality of the weight distribution can typically be determined by SEC, when applicable (see remark made for the polydispersity). Preferably, each of both pics of the bimodal distribution has a polydispersity of less than 1.2, preferably less than 1.1. This can be evaluated by deconvolution of the chromatograph.

Without being bound by theory, it is believed that this bimodal distribution translates the simultaneous presence of di-blocks copolymer chains and tri-blocks copolymer chains in the block copolymer.

In particular, if the process started by the formation of the PE block, the block copolymer formed will typically comprise a polymer block formed of the polymerized one or more vinyl monomers, at least one of them not being ethylene, attached to one or two polyethylene blocks. Most typically, the product will be a mixture of a) block copolymers comprising a polymer block formed of the polymerized one or more vinyl monomers, at least one of them not being ethylene, attached to one polyethylene block, and b) block copolymers comprising a polymer block formed of the polymerized one or more vinyl monomers, at least one of them not being ethylene, attached to two polyethylene blocks (one at each extremity of the polyvinyl block).

Similarly, if the process started by the formation of the vinyl block, the block copolymer formed will typically comprise a polyethylene block attached to one or two polymer blocks formed of the polymerized one or more vinyl monomers, at least one of them not being ethylene. Most typically, the product will be a mixture of a) block copolymers comprising a polyethylene block attached to one polymer block formed of the polymerized one or more vinyl monomers, at least one of them not being ethylene, and b) block copolymers comprising a polyethylene block attached to two polymer blocks formed of the polymerized one or more vinyl monomers, at least one of them not being ethylene (one at each extremity of the PE block).

The block copolymers obtained by the process of the present invention are typically linear.

All existing process for producing block copolymers result in the formation of a product comprising some homopolymer chains. It is an advantage of embodiments of the process of the present invention that the product may comprise less than 15 wt%, less than 10 wt%, or even less than 5 wt% homopolymer chains.

The block copolymers obtained by the process of the present invention typically comprise an end-group (typically at least at the alpha chain end, i.e. where polymerization started) corresponding to the radical involved in the initiation of the polymerization.

The block copolymers obtained by the process of the present invention comprise a polyethylene (PE) block.

There is no lower limit to the PE block molecular mass achievable by the process of the present invention since it is always possible to interrupt the polymerization process early. It is however an advantage of embodiments of the present invention that they permit the formation of block copolymers having a PE block having an absolute number average molecular mass (absolute Mn) of at least 700 g/mol, preferably at least 800 g/mol, more preferably at least 1000 g/mol, yet more preferably at least 1200 g/mol, and most preferably at least 1500 g/mol. Absolute number average molecular mass can for instance be determined as mentioned for the block copolymer.

In embodiments, the PE block obtained by the process of the present invention may comprise at least 20, preferably at least 25, more preferably at least 35, yet more preferably at least 40, and most preferably at least 50 repeat units as determined by $^1$H NMR.

In embodiments, the process of the present invention permits the formation of a block copolymer comprising a PE block having a polydispersity of less than 1.2. This can for instance be determined as mentioned for the block copolymer.

The PE block obtained by the process of the present invention is typically linear.

The block copolymers obtained by the process of the present invention comprise a block formed of the polymerization of one or more vinyl monomers, at least 50 mol% of which being selected from a specific list (see below), at least one of them not being ethylene. Hereinafter, this block will be referred to as the "*vinyl block*".

There is no lower limit to the vinyl block molecular mass achievable by the process of the present invention

since it is always possible to interrupt the polymerization process early. It is however an advantage of embodiments of the present invention that they permit the formation of block copolymers having a vinyl block having an absolute number average molecular mass (absolute Mn) of at least 2500 g/mol. Absolute number average molecular mass can for instance be determined as mentioned for the block copolymer.

In embodiments, the process of the present invention permits the formation of a block copolymer comprising a vinyl block having a polydispersity of less than 1.2. This can for instance be determined as mentioned for the block copolymer, when applicable.

The vinyl block obtained by the process of the present invention is typically linear.

The vinyl block can be a homopolymer, a statistical copolymer, or a gradient copolymer.

If it is a homopolymer, it does not comprise ethylene as a monomer and it is formed from a single vinyl monomer.

In an embodiment, the one or more vinyl monomers, at least one of them not being ethylene, are a single vinyl monomer and the block copolymer comprises a polyethylene block and a block formed of the homopolymerization of the single vinyl monomer other than ethylene.

If the vinyl block is a statistical copolymer, it comprises at least one vinyl monomer other than ethylene. It may be ethylene-free or it may be a statistical or gradient copolymer of ethylene and one or more other vinyl monomer. The number of monomers entering the composition of the statistical or gradient copolymer is not limited.

The vinyl block must be formed of at least 50 mol%, preferably at least 70 mol%, more preferably at least 80 mol%, yet more preferably at least 90 mol%, yet more preferably at least 95 mol%, yet more preferably at least 99 mol%, and yet more preferably entirely of one or more vinyl monomers selected from a specific list, at least one of said one or more vinyl monomers not being ethylene.

In embodiments, the vinyl block may be formed from at most 99.5%, 99%, 98%, 95%, or 90% ethylene.

In an embodiment, the specific list may consist of ethylene, vinyl esters, non-conjugated N-vinyl monomers, acrylonitrile, (meth)acrylates and (meth)acrylamides, at least one of said one or more vinyl monomers not being ethylene.

Preferably, the vinyl esters may be monoethylenically unsaturated monomers of the general formula $HR_1C=CR_2O(CO)R_3$ wherein $R_1$ and $R_2$ are independently selected from H and $CH_3$, and $R_3$ is selected from the group consisting of $C_1$-$C_{20}$-alkyl groups, $C_5$-$C_{20}$-cycloalkyl groups, and $C_6$-$C_{24}$-aryl groups. $R_1$ is preferably H. A preferred example is vinyl acetate.

The non-conjugated N-vinyl monomers are said to be non-conjugated because there is no double bond conjugated with the vinyl group. The non-conjugated N-vinyl monomers may comprise conjugation elsewhere in the monomer. The non-conjugated N-vinyl monomers have a vinyl group attached to a nitrogen atom. Examples are N-vinylcarbazole (NVC), N-vinylindole ($NVI_n$) derivatives with $R_1$ and $R_2$ being e.g. independently $C_1$-$C_{20}$ alkyl groups, N-vinylpyrrolidone (NVP), N-vinylcaprolactam (NVCL), N-vinylformamide (NVF), N-vinylacetoamide (NVA) derivatives, N-methyl-N-vinylacetamide (NMVA), N-vinylphthalimide (NVPI), N-vinylnaphthalimide (NVNPI), N-vinylimidazole (NVIm), N-vinylimidazolium salts (NVIm-X) wherein R is e.g. a $C_1$-$C_{20}$ alkyl group and X is an halogen, and N-vinyltriazoles (NVTri). These monomers are represented below:

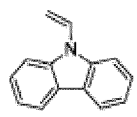

NVC

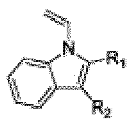

NVIn

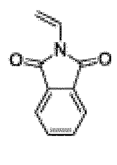

NVPI

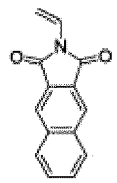

NVNPI

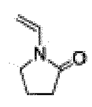

NVP

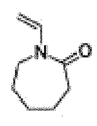

NVCL

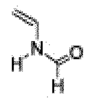

NVF

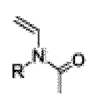

NVA: R =H
NMVA: R = $CH_3$

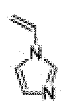

NVIm

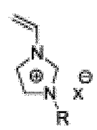

NVIm-X

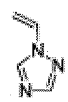

NVTri

Preferably, the non-conjugated N-vinyl monomers may be monoethylenically unsaturated monomers of the

general formula $HR_1C{=}C{-}NR_2(CO)R_3$ wherein $R_1$ is selected from H and $CH_3$, $R_2$ either forms a 5 to 7 members ring with $R_3$ or is selected from H and $CH_3$, and $R_3$, if not forming a ring with $R_2$, is selected from the group consisting of H and $C_1$-$C_{20}$ alkyl groups. A preferred example is N-Methyl-N-vinylacetamide.

Preferably, the (meth)acrylates may be monoethylenically unsaturated monomers of the general formula $HR_1C{=}CR_2{-}(CO)OR_3$ wherein $R_1$ and $R_2$ are independently selected from H and $CH_3$, and $R_3$ is selected from the group consisting of H and $C_1$-$C_{20}$-alkyl groups. $R_1$ is preferably H. Examples are acrylic acid, methacrylic acid, t-amyl methacrylate, n-butyl acrylate and methyl methacrylate. Preferred examples are n-butyl acrylate and methyl methacrylate.

Preferably, the (meth)acrylamides may be monoethylenically unsaturated monomers of the general formula $HR_1C{=}CR_2{-}(CO)NR_3R_4$ wherein $R_1$, and $R_2$ are independently selected from H and $CH_3$, $R_3$ is H or $CH_3$ and $R_4$ is selected from the group consisting of H and $C_1$-$C_{20}$-alkyl groups. $R_1$ is preferably H. Examples are acrylamide and N-(n-Octadecyl)acrylamide. A preferred example is acrylamide.

In a preferred embodiment, the specific list may consist of ethylene, vinyl esters and non-conjugated N-vinyl monomers, at least one of said one or more vinyl monomers not being ethylene.

In a more preferred embodiment, the specific list may consist of ethylene, vinyl acetate, and N-Methyl-N-vinylacetamide, at least one of said one or more vinyl monomers not being ethylene.

The vinyl monomers chosen outside of the specific list may be any vinyl monomer different from the vinyl monomers of the considered specific list.

In particular, the vinyl monomers chosen outside of the specific list may be monoethylenically unsaturated monomers of the general formula $H_2C{=}CR_2R_3$ wherein $R_2$, $R_3$ are independently selected from the group consisting of hydrogen, $C_1$-$C_{20}$ alkyl groups, $C_5$-$C_{20}$-cycloalkyl groups, $C_6$-$C_{24}$-aryl groups (e.g. phenyl), cyano, $C_1$-$C_{20}$-alkylester groups (with either the oxygen or the carbonyl attached to the double bond), $C_5$-$C_{20}$-cycloalkyl ester groups (with either the oxygen or the carbonyl attached to the double bond), $C_1$-$C_{20}$ alkyl amide groups (with either the nitrogen attached to the double bound, e.g. formamide, acetoamide, N-methyl acetoamide,... or the carbonyl attached to the double bond, e.g. acrylamide), $C_5$-$C_{20}$ cycloalkyl amide groups (with either the nitrogen attached to the double bound e.g. pyrrolidone, caprolactam,... or the carbonyl attached to the double bond), $C_4$-$C_{20}$ cycloalkyl imide groups (e.g. phthalimide, naphthalimide, ...), $C_6$-$C_{20}$ aryl amide groups (with the nitrogen attached to the double bound), imidazole, imidazolium salts, triazole, triazolium salts, carbazole groups, indole groups, cyclocarbonate groups, carbonate groups, and anhydride groups, amongst others. Preferably, $R_2$ is either hydrogen or methyl.

An example of vinyl monomer working particularly well with the present invention is vinyl acetate. For instance, the process according to the present invention may be for the preparation of a block copolymer comprising a polyethylene block and a block formed of the homopolymerization of vinyl acetate.

As another example, the process according to the present invention may be for the preparation of a block copolymer comprising a polyethylene block and a block formed of the copolymerization of vinyl acetate with one or more other monomers, for instance the copolymerization of vinyl acetate and ethylene.

As yet another example, the process according to the present invention may be for the preparation of a block copolymer comprising a polyethylene block and a block formed of the homopolymerization of N-Methyl-N-vinylacetamide.

Preferred vinyl monomers comprise only one vinyl group.

In embodiments, the process of the present invention may comprise a step of hydrolysing the block copolymer obtained in step b. This permits the formation of block copolymers comprising polymerized vinyl alcohol and/or vinyl amine in the vinyl block.

In embodiments, the block copolymer may comprise chains selected from the list consisting of polyethylene-b-poly(vinyl alcohol), polyethylene-b-poly(vinyl alcohol)-b-polyethylene, poly(vinyl alcohol)-b-polyethylene, poly(vinyl alcohol)-b-polyethylene-b-poly(vinyl alcohol), polyethylene-b-poly(ethylene-vinyl alcohol), polyethylene-b-poly(ethylene-vinyl alcohol)-b-polyethylene, poly(ethylene-vinyl alcohol)-b-polyethylene-b-poly(ethylene-vinyl alcohol), polyethylene-b-poly(acrylic acid), polyethylene-b-poly(acrylic acid)-b-polyethylene, poly(acrylic acid)-b-polyethylene, poly(acrylic acid)-b-polyethylene-b-poly(acrylic acid), polyethylene-b-poly(vinyl amine), polyethylene-b-poly(vinyl amine)-b-polyethylene, poly(vinyl amine)-b-polyethylene, poly(vinyl amine)-b-polyethylene-b-poly(vinyl amine), polyethylene-b-poly(vinyl acetate), polyethylene-b-poly(vinyl acetate)-b-polyethylene, poly(vinyl acetate)-b-polyethylene, poly(vinyl acetate)-b-polyethylene-b-poly(vinyl acetate), polyethylene-b-poly(N-Methyl-N-vinylacetamide), polyethylene-b-poly(N-Methyl-N-vinylacetamide)-b-polyethylene, poly(N-Methyl-N-vinylacetamide)-b-polyethylene, poly(N-Methyl-N-vinylacetamide)-b-polyethylene-b-poly(N-Methyl-N-vinylacetamide), polyethylene-b-poly(ethylene-vinyl acetate), polyethylene-b-poly(ethylene-vinyl acetate)-b-polyethylene, poly(ethylene-vinyl acetate)-b-polyethylene, poly(ethylene-vinyl acetate)-b-polyethylene-b-poly(ethylene-vinyl acetate).

In embodiments, the block copolymer may consist of chains of polyethylene-b-poly(vinyl alcohol) and polyethylene-b-poly(vinyl alcohol)-b-polyethylene.

In embodiments, the block copolymer may consist of chains of poly(vinyl alcohol)-b-polyethylene and poly(vinyl alcohol)-b-polyethylene-b-poly(vinyl alcohol).

In embodiments, the block copolymer may consist of chains of polyethylene-b-poly(ethylene-vinyl alcohol) and

polyethylene-b-poly(ethylene-vinyl alcohol)-b-polyethylene.

In embodiments, the block copolymer may consist of chains of poly(ethylene-vinyl alcohol)-b-polyethylene and poly(ethylene-vinyl alcohol)-b-polyethylene-b-poly(ethylene-vinyl alcohol).

In embodiments, the block copolymer may consist of chains of polyethylene-b-poly(acrylic acid) and polyethylene-b-poly(acrylic acid)-b-polyethylene.

In embodiments, the block copolymer may consist of chains of poly(acrylic acid)-b-polyethylene and poly(acrylic acid)-b-polyethylene-b-poly(acrylic acid).

In embodiments, the block copolymer may consist of chains of polyethylene-b-poly(vinyl amine) and polyethylene-b-poly(vinyl amine)-b-polyethylene.

In embodiments, the block copolymer may consist of chains of poly(vinyl amine)-b-polyethylene and poly(vinyl amine)-b-polyethylene-b-poly(vinyl amine).

In embodiments, the block copolymer may consist of chains of polyethylene-b-poly(vinyl acetate) and polyethylene-b-poly(vinyl acetate)-b-polyethylene.

In embodiments, the block copolymer may consist of chains of poly(vinyl acetate)-b-polyethylene and poly(vinyl acetate)-b-polyethylene-b-poly(vinyl acetate).

In embodiments, the block copolymer may consist of chains of polyethylene-b-poly(N-Methyl-N-vinylacetamide) and polyethylene-b-poly(N-Methyl-N-vinylacetamide)-b-polyethylene.

In embodiments, the block copolymer may consist of chains of poly(N-Methyl-N-vinylacetamide)-b-polyethylene and poly(N-Methyl-N-vinylacetamide)-b-polyethylene-b-poly(N-Methyl-N-vinylacetamide).

In embodiments, the block copolymer may consist of chains of polyethylene-b-poly(ethylene-vinyl acetate) and polyethylene-b-poly(ethylene-vinyl acetate)-b-polyethylene.

In embodiments, the block copolymer may consist of chains of poly(ethylene-vinyl acetate)-b-polyethylene and poly(ethylene-vinyl acetate)-b-polyethylene-b-poly(ethylene-vinyl acetate).

The process of the present invention can start either by homopolymerizing ethylene or by polymerizing the one or more vinyl monomers, at least one of them not being ethylene.

In both approaches, the first and the second polymerizations are both performed in presence of a same organic cobalt complex and optionally an initiator.

The organic cobalt complex advantageously generates carbon-cobalt bonds endcapping the growing polymer chains.

The organic cobalt complex comprises a cobalt atom bound to one or preferably, to two organic ligands. Each organic ligand has at least two heteroatoms, each being independently selected from N and O. It is through these heteroatoms that the organic ligand binds and coordinates to the cobalt atom, thereby forming a chelate ring.

Examples of suitable organic ligands are acetylacetonate (acac, see compounds 6a-f below), 2,2'-ethylenebis(nitrilomethylidene)diphenol, N,N'-ethylenebis(salicylimine) (salen, see compounds 5a-c below), and porphyrin (see compounds 2a-e below)

Examples of organic cobalt complexes that can be used in the present invention are depicted below:

1 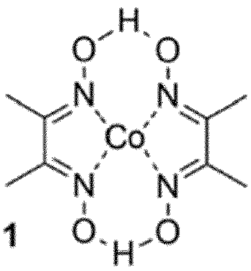

;

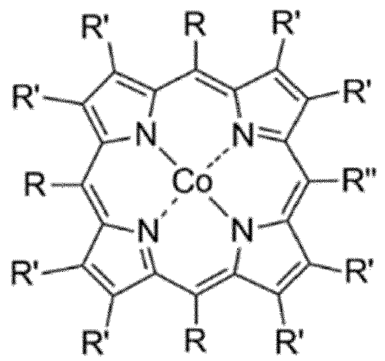

**2a** R, R',R'' = H
**2b** R, R'' = Mesityl, R' = H
**2c** R, R'' = Mesityl, R' = Br
**2d** R, R'' = 3,5-disulfonatomesityl, R' = H
**2e** R = Mesityl, R' = H, R'' = $-O(CH_2)_{10}-OH$ ;

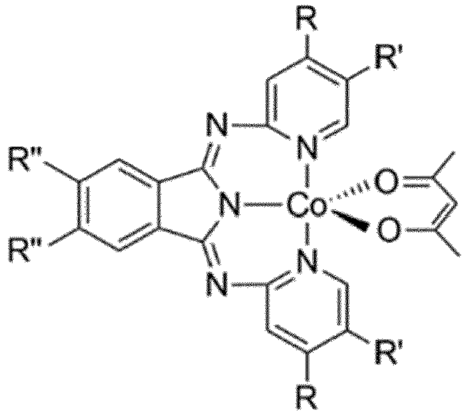

**3a** R , R' , R'' : H, Me, hex, tBu, -OMe Cl, $NO_2$

;

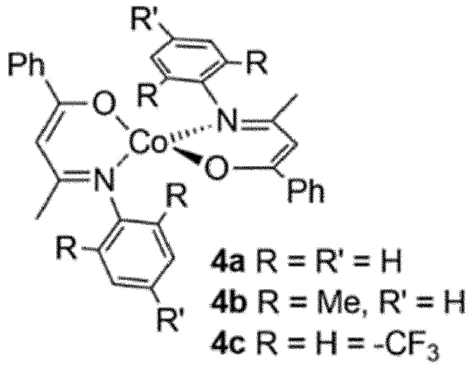

**4a** R = R' = H
**4b** R = Me, R' = H
**4c** R = H = $-CF_3$

;

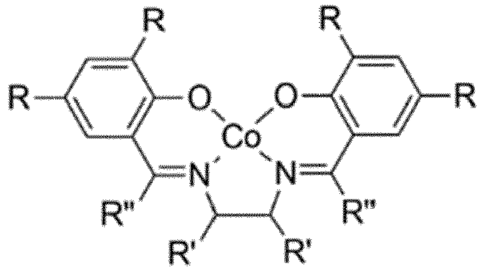

**5a** R = R' = R" = H
**5b** R = R' = H, R" = Me
**5c** R = tBu, R" = H, 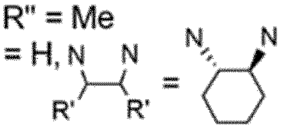

;

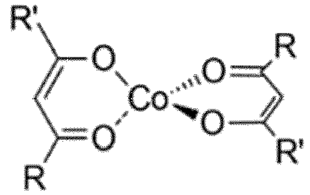

**6a** R = R' = Me
**6b** R = R' = tBu
**6c** R = R' = $-CF_3$
**6d** R = Me, R' = $-CF_3$
**6e** R = tBu, R'=$-C_3F_7$
**6f** R = $CF_3$, R' = thiophenyl

In embodiments, the organic cobalt complex may comprise two or three (preferably two) beta-diketonato ligands bound to a bivalent or trivalent cobalt atom. In such a complex, cobalt is bound and coordinated to both oxygen atoms of each diketonato ligand which forms a six-membered chelate ring.

The term "*beta-diketonato ligands*", also named 1, 3-diketonato ligands, is to be understood in the present application as bearing two carbonyl groups that are separated by one carbon atom, which is the alpha carbon.

The organic cobalt complex is more preferably a cobalt (II) beta-diketonate or an alkyl-cobalt (III) adduct.

When the organic cobalt complex is a cobalt (II) beta-diketonate, it may be represented by the formulas 6a-f.

Examples of usable cobalt (II) beta-diketonates are cobalt (II) bis (acetylacetonate) (6a); cobalt (II) bis (6,6,7,7,8,8,8,-heptafluoro-3,5-dimethyloctanedionate) (6e); cobalt (II) bis (2,2,6,6-tetramethyl-3,5-heptanedionate) (6b); cobalt (II) bis (trifluoroacetylacetonate) (6d), cobalt (II) bis (hexafluoroacetylacetonate) (6c) and cobalt (II) bis (thenoyltrifluoroacetonate) (6f). A preferred cobalt (II) beta-diketonate is cobalt (II) bis (acetylacetonate) (6a), also referred to herein as "*$Co(acac)_2$*".

When the organic cobalt complex is an alkyl-cobalt (III) adduct, the alkyl-cobalt (III) adduct is a cobalt-containing compound containing a primary radical derived from a free radical initiator (e.g. as described below). Although these compounds are called "*alkyl-cobalt adducts*", the primary radical is not necessary an "*alkyl*" radical in the strict sense since it may comprise other atoms than carbon and hydrogen. A more descriptive name would be "*radical-cobalt* (*III*) *adduct*" but since the commonly used name is "*alkyl-cobalt (III) adduct*", this is also the terminology that will be used in the present description. Some alkyl-cobalt adducts may be obtained for instance by reacting a free radical initiator with an organic cobalt (II) complex (e.g. cobalt (II) beta-diketonate) in a liquid medium containing an ethylenically unsaturated monomer.

$Co(acac)_2$ being preferred as cobalt (II) beta-diketonate, preferred alkyl-cobalt adducts are represented by the formula R-$Co(acac)_2$ wherein R either comprises the primary radical derived from the decomposition of a free radical initiator and 1 to 10 monomeric units (preferably 2 to 5, e.g. 3) resulting from the ethylenically unsaturated monomer, or

is of general formula - $CH_2X$ wherein X is a halogen. The halogen is preferably Cl or Br.

Vinyl esters are preferred as ethylenically unsaturated monomer, vinyl acetate being especially preferred. More preferred alkyl-cobalt (III) adducts represented by the formula

$R_1$-($CH_2$-CH(OAc))$_n$-Co(acac)$_2$ wherein n is from 1 to 10 and $R_1$ is a primary radical derived from the decomposition of a free radical initiator, preferably of an oil-soluble free radical initiator. N is preferably from 2 to 5 and is for instance 3.

Oil-soluble free radicals initiators are preferred. Oil-soluble azo initiators are further preferred as oil-soluble free radicals initiators, 2,2'-azobis (4-methoxy-2.4-dimethyl valeronitrile (V-70)) being especially preferred.

A most preferred organic cobalt complex is therefore obtained (e.g. according to A. Debuigne et al. in Chem. Eur. J. 2008, 14, 4046-4059, doi : 10.1002/chem.200701867) by reacting V-70 with Co(acac)$_2$ in liquid vinyl acetate and corresponds to the following formula : R-Co(acac)$_2$ wherein R is -(CH(OAc)-$CH_2$)$_n$-C($CH_3$)(CN)-$CH_2$-C($CH_3$)$_2$($OCH_3$) wherein OAc stands for an acetoxy group and n is from 1 to 10, preferably 2 to 5, for instance 3.

Aside from the ligands comprised in the organic cobalt complex, no additional "free" ligand need to be added to the reaction. Preferably, no such additional ligand is used.

The process of the present invention may be performed in presence of an initiator for radical polymerization. When the organic cobalt complex is an alkyl-cobalt (III) adduct, the organic cobalt complex already plays the role of an initiator as it exists in equilibrium with the corresponding cobalt (II) complex and the radical. In other words, when the organic cobalt complex is an alkyl-cobalt (III) adduct, the adduct generates in-situ the radical and the Co(II) complex playing the role of the controlling agent for the polymerization. This radical can initiate the polymerization. An additional initiator is therefore not necessary but may be used. When the organic cobalt complex is not an alkyl-cobalt adduct and hence does not exist in equilibrium with a radical, an additional free radical initiator is advantageously used.

Examples of free radical initiators that can be used in embodiments of the present invention encompass oil-soluble free radical initiators; examples of oil-soluble free radicals initiators are oil-soluble peroxy compounds such as

- dialkylperoxydicarbonates (dimethyl-, diethyl-, di-n-propyl-, di-iso- propyl, di(sec-butyl)-, di(2-ethylhexyl)-, dimyristyl- and the like), dicetylperoxydicarbonate, dicyclohexylperoxydicarbonate, di(t-butyl- cyclohexyl)peroxydicarbonate, di(4-tert-butylcyclohexyl) peroxydicarbonate;
- dialkyl percarbonates such as tert-amylperoxy-2-ethylhexyl carbonate and tert-butylperoxyisopropyl carbonate;
- acetyl cyclohexane sulphonyl peroxide;
- dialkylperoxides (di-t-butylperoxide, dicumylperoxide and the like);
- diacyl peroxides such as diisononanoyl peroxide, dioctanoyl peroxide, didecanoyl peroxide, dibenzoylperoxide, dilaurylperoxide, di(2-methylbenzoyl) peroxide, di(4-chlorobenzoyl) peroxide, and diisobutyriyl peroxide and the like;
- peresters such as cumyl perneodecanoate, tert-amyl perneodecanoate, t- butylperoxy-n-decanoate, t-butylper-2-ethylhexanoate, tert-amyl perpivalate, tert-butyl perpivalate, t-butylperoxymaleate, tert-butyl perisobutyrate, tert-butyl perisononanoate, 2,5-dimethylhexane, 2,5-diperbenzoate, tert-butyl perbenzoate and the like;
- perketals such as I, I-bis(tert-butylperoxy)cyclohexane and 2,2-bis(tert-butylperoxy)butane;
- ketone peroxides such as cyclohexanone peroxide and acetyl acetone peroxide;
- organic hydroperoxides such as cumene hydroperoxide, tert-butyl hydroperoxide and pinane hydroperoxide;
- oil-soluble azo initiators such as 2,2'-azobis (4-methoxy-2.4-dimethyl valeronitrile), 2,2'-azobis (2.4-dimethyl valeronitrile), 2,2'-azobis(isobutyronitrile), 2,2'-azobis(2-cyano-2-butane), dimethyl 2,2'-azobisdimethylisobutyrate, dimethyl 2,2'-azobis(2-methylpropionate), 2,2'-azobis(2-methylbutyronitrile), 1,1'-azobis(cyclohexane-1-carbonitrile), 2,2'-azobis[N-(2-propenyl)-2- methylpropionamide], 1-[(1-cyano-1-methylethyl)azo]formamide, 2,2'-azobis(N-cyclohexyl-2-methylpropionamide), 2,2'-azobis(isobutyronitrile), 2,2'-azobis(2-cyano-2-butane), dimethyl 2,2'-azobisdimethylisobutyrate, 1-azobis(cyclohexanecarbonitrile), 2-(t-butylazo)-2-cyanopropane, 2,2'-azobis[2-methyl-N-(1,1)-bis(hydroxymethyl)-2-hydroxyethyl]propionamide, 2,2'-azobis[2-methyl- N-hydroxyethyl]-proprionamide, 2,2'-azobis(N,N'-dimethyleneisobutyramine), 2,2'-azobis(2-methyl-N-[1,1- bis(hydroxymethyl)-2-hydroxyethyl] propionamide), 2,2'-azobis(2- methyl-N-[1, 1-bis(hydroxymethyl) ethyl] proprionamide), 2,2'-azobis[2- methyl-N-(2-hydroxyethyl) propionamide], 2,2'-azobis(isobutyramide) dihydrate, 2,2'-azobis(2,2,4-trimethylpentane), 2,2'-azobis(2-methylpropane)and the like;

- 2,2'-azobis (4-methoxy-2.4-dimethyl valeronitrile) (V-70), diethylperoxydicarbonate and dilaurylperoxide are preferred as oil-soluble free radicals initiators.

For the preparation of the block copolymer, two approaches can be followed. One can start with the formation of the PE block or one can start with the formation of the vinyl block.

If one starts with the formation of the PE block, the process comprises:

a. Polymerizing ethylene as sole monomer under a pressure of at least 300 bar in presence of an organic cobalt complex and optionally an initiator for radical polymerization, thereby forming a macroinitiator comprising a first polymer block comprising polyethylene,

b. Contacting the macroinitiator with one or more vinyl monomers, at least 50 mol% of which being selected from the specific list, at least one of said one or more monomers not being ethylene, thereby forming a second polymer block attached to the first polymer block and thereby forming the block copolymer.

If one starts with the formation of the vinyl block, the process comprises:

a. Polymerizing one or more vinyl monomers, at least 50 mol% of which being selected from the specific list, at least one of said one or more monomers not being ethylene, in presence of an organic cobalt complex and optionally an initiator for radical polymerization, thereby forming a macroinitiator comprising a first polymer block comprising the polymerized one or more vinyl monomers, at least one of them not being ethylene,

b. Contacting the macroinitiator with ethylene under a pressure of at least 300 bar, thereby forming a second polymer block attached to the first polymer block and thereby forming the block copolymer.

Although both approaches (ethylene first or vinyl monomer first) permit to obtain block copolymers comprising a PE block and a vinyl block, it is advantageous to start by the polymerization of the one or more vinyl monomers. Indeed, when we start with the polymerization of ethylene, the growing PE chain get quickly poorly soluble, which limits its Mn and reduces its efficiency as a macroinitiator.

Step a of the process according to the present invention is therefore preferably a step of polymerizing one or more vinyl monomers, at least one of them not being ethylene.

For both approaches, it is preferred that the formation of the PE block be performed under a pressure of at least 300 bar, more preferably at least 350 bar, yet more preferably at least 400 bar and most preferably at least 450 bar. There is no upper limit for the pressure but a practical upper limit may be set at 2000 bar and is typically not higher than 600 or 550 bar. It has been observed within embodiments of the present invention that by polymerizing ethylene in this pressure range in presence of the organic cobalt complex, a block co-polymer comprising a linear polyethylene block can be achieved, which is advantageous.

It is also preferable that the temperature for that reaction be set at a value from 30 to 200°C, preferably from 50 to 120°C, more preferably from 60 to 100°C. In embodiments, the formation of the ethylene block may be performed in isothermal conditions. The reaction time for this step depends in part on the degree of polymerization one wishes to achieve. For instance, it can be 1h or more, 2h or more, or 3h or more. For instance, it can be from 1h to 24h or from 3h to 10h. Typically, the formation of the PE block will be performed in a liquid media comprising at least one solvent selected from the list consisting of water, dichloromethane, dimethyl carbonate, diethyl carbonate, a dichlorobenzene (o-, m-, or p-), and 1, 2, 4-trichlorobenzene.

Preferably, the liquid media may comprise at least one solvent selected from the list consisting of dichloromethane, dimethyl carbonate, diethyl carbonate, a dichlorobenzene (o-, m-, or p-), and 1, 2, 4-trichlorobenzene.

More preferably, the liquid media may comprise at least one solvent selected from the list consisting of dimethyl carbonate, diethyl carbonate, a dichlorobenzene (o-, m-, or p-), and 1, 2, 4-trichlorobenzene. Preferably, this liquid media will comprise at least 40wt%, more preferably at least 60wt%, yet more preferably at least 80% of a solvent selected form a list above or of a mixture thereof. More preferably, this liquid media consists of a solvent selected form this list or of a mixture thereof. These solvents are advantageous because it was observed that they permitted to achieve high Mn and low polydisperisties. Dichloromethane leads to the formation of transfer products and is therefore less preferred than the other listed solvents. Dimethyl carbonate is particularly preferred as it is with this solvent that the highest Mn and the lowest polydispersities have been observed. Also an absence of transfer to the solvent was observed.

For both approaches, the reaction temperature for the formation of the vinyl block is preferably adapted to the vinyl monomers involved. For instance, this temperature can be 0°C for the homopolymerization of acrylonitrile or 40°C for the homopolymerization of vinyl acetate. A temperature of from 0 to 60°C, e.g. from 20 to 50°C is suitable in most cases. In embodiments, the formation of the vinyl block may be performed in isothermal conditions. The reaction time

for this step depends in part on the degree of polymerization one wishes to achieve. For instance, it can be 1 h or more, or 2h or more. For instance, it can be from 1 h to 10h or from 1.5h to 4h.

If one starts with the formation of the PE block, the formation of the vinyl block can be operated at the same pressure or at a different pressure than the pressure used for the polymerization of the PE block. The formation of the vinyl block does not require to work at an elevated pressure and can therefore be performed at atmospheric pressure.

In particular, if one starts with the formation of the vinyl block, there is no reason to perform this step under pressure, although this can be done. This step will typically be performed outside of the pressurizable reactor and only transferred therein once step a is performed.

Also, if one starts with the formation of the vinyl block, this first step can be performed either in the bulk (in absence of solvent, where the monomer acts as the solvent) or in presence of a solvent suitable for solubilizing the growing vinyl block. For instance, vinyl acetate can be polymerized in the bulk while acrylonitrile is preferably polymerized in a polar aprotic solvent such as DMF or DMSO. After formation of the macroinitiator comprising the vinyl block, this block may be solubilized in a liquid media as described as suitable for the formation of the PE block, then this solution may be contacted with ethylene under pressure to form the PE block.

If one starts with the formation of the PE block, this step can in embodiments be performed by introducing the organic cobalt complex, the optional initiator, a suitable liquid media (see above) and ethylene in a reactor pressurized at at least 50 bar and set at a temperature of from 30 to 200°C. Next, e.g. after at least 1 h, the vinyl monomers may be added to the reactor and the pressure may be set to atmospheric pressure. Temperature may be adapted to the vinyl monomers involved.

If one starts with the formation of the vinyl block, the process for the preparation of a block copolymer may comprise:

a. Polymerizing one or more vinyl monomers, other than ethylene, in presence of an organic cobalt complex and optionally an initiator for radical polymerization, thereby forming a macroinitiator comprising a first polymer block formed of the polymerized one or more vinyl monomers,

b. Solubilizing the macroinitiator in a liquid media described as suitable for the polymerization of ethylene (see above), thereby forming a macroinitiator solution, and

c. Contacting the macroinitiator solution with ethylene under a pressure of at least 300 bar, preferably at least 350 bar, at a temperature of at least 30°C, preferably at least 40°C, for at least 1h, preferably at least 2h, thereby forming a block copolymer comprising a polyethylene block attached to one or two first polymer blocks.

Any feature of the first aspect may be as correspondingly described for the second aspect.

In embodiments, after step b, the process may also comprise an extraction step to extract the organic cobalt complex from the obtained block copolymer. The process may also comprise a hydrolysis step. If one vinyl monomer is a vinyl ester, the process may comprise a hydrolysis step comprising hydrolysing the polyvinyl ester block to obtain a polyvinyl alcohol block. If one vinyl monomer is a vinyl amide, the process may comprise a hydrolysis step comprising hydrolyzing the polyvinyl amide block to obtain a polyvinyl amine block.

In a second aspect, the present invention relates to a block copolymer obtainable by the process according to any embodiment of the first aspect. Although it is often not possible to find a solvent which is able to solubilize the different block types composing a block copolymer obtained by the process of the first aspect, which drastically reduces possibilities to characterize it, this does not reduce the usefulness of the obtained copolymer as it can be processed by melting. Many block copolymers of the second aspect cannot adequately be characterized and their structure cannot be described better than by referring to the process used for manufacturing them.

In particular, block copolymers according the second aspect may comprise a polyethylene block attached to a block obtained from the polymerisation of one or more vinyl monomers, selected from the list consisting of ethylene, vinyl esters, N-vinyl monomers, acrylonitrile, (meth)acrylates, (meth)acrylamides, and hydrolysis products thereof, at least one of the one or more vinyl monomers not being ethylene.

Any feature of the second aspect may be as correspondingly described for the first aspect.

In particular, the polyethylene block may comprise at least 20 repeat units as determined by $^1$H NMR.

In embodiments, the block copolymer may have an absolute number average molecular mass of at least 5000 g/mol.

In embodiments, the block copolymer may have a polydispersity of less than 1.5.

In embodiments, the block copolymer may have a bimodal distribution.

In embodiments, the block copolymer may be linear.

In embodiments, the block copolymer may comprise chains selected from the list consisting of polyethylene-b-poly(vinyl alcohol), polyethylene-b-poly(vinyl alcohol)-b-polyethylene, poly(vinyl alcohol)-b-polyethylene, poly(vinyl alcohol)-b-polyethylene-b-poly(vinyl alcohol), polyethylene-b-poly(ethylene-vinyl alcohol), polyethylene-b-poly(ethylene-vinyl alcohol)-b-polyethylene, poly(ethylene-vinyl alcohol)-b-polyethylene, poly(ethylene-vinyl alcohol)-b-polyethylene-b-poly(ethylene-vinyl alcohol), polyethylene-b-poly(acrylic acid), polyethylene-b-poly(acrylic acid)-b-polyethylene, poly(acrylic acid)-b-polyethylene, poly(acrylic acid)-b-polyethylene-b-poly(acrylic acid), polyethylene-b-poly(vinyl amine), polyethylene-b-poly(vinyl amine)-b-polyethylene, poly(vinyl amine)-b-polyethylene and poly(vinyl amine)-b-polyethylene-b-poly(vinyl amine).

Examples

All reactions were performed under inert atmosphere using Schlenk techniques. Vinyl acetate (VAc, >99 %, Aldrich) was dried over $CaH_2$, degassed by several freeze-pump-thaw cycles, distilled and stored at -20 °C. Dichloromethane ($CH_2Cl_2$), dimethylcarbonate (DMC) and trichlorobenzene (TCB) were dried over 4 A molecular sieves. Organocobalt initiator (R-Co) was prepared according to a previous report (Chem. Eur. J. 2008, 14, 4046-4059) and stored at -20 °C as a $CH_2Cl_2$ solution. Ethylene (N35, 99.95 %) was purchased from Air Liquide and used as received.

Example 1: Synthesis of poly(vinyl acetate)-b-poly(ethylene) block copolymer.

The reaction scheme is shown in Fig. 1.

1a. Synthesis of PVAc first block.

A solution of organocobalt in $CH_2Cl_2$ (3.5 mL of a 0.09 M stock solution, 3.25 $10^{-4}$ mol) was introduced under argon into a 30 mL Schlenk and evaporated to dryness under reduced pressure at room temperature. Vinyl acetate (10.0 mL, 0.108 mol) was added under argon and the solution was heated at 40 °C for 7 hours. After reaction, an aliquot was analyzed by $^1$H-NMR spectroscopy in $CDCl_3$ to evaluate the conversion (25%) and the molecular parameters of the polymer were determined by SEC in THF using PS as a calibration after adding some TEMPO (Molecular characteristics of PVAc: Mn = 9300 g/mol, PDI = 1.08). Then the mixture was evaporated to dryness under reduced pressure at room temperature.

The degree of polymerization of PVAc ($DP_{PVAc}$) was determined by $^1$H NMR spectroscopy of an aliquot of PVAc dried under vacuum at 50°C. The procedure consists in comparing the integrals of the methoxy groups ($CH_3O$-) ($I_{CH3O}$) at the $\alpha$-chain end at 3.15 ppm with the integral of -CH- of the repeating unit (-$CH_2$-*CH*OAc) ($I_{CH}$) at 4.8 ppm. The equation to determine $DP_{PVAc}$ is:

$$DP_{PVAc} = I_{CH}/(I_{CH3O}/3)$$

In this case, $DP_{PVAc}$ = 120.

The absolute molar mass (Mn,abs expressed in g/mol) is obtained by the equation:

$$Mn,abs = (DP \times M_{VAc}) + 140,$$

where $M_{VAc}$ is the molar mass of vinyl acetate, thus 86.09 g/mol. 140 corresponds to the V70 initiating fragment.

In this case, Mn, abs = 10470 g/mol.

1 b. Synthesis of PVAc-b-PE.

Degassed dimethylcarbonate (6 mL) were added in the Schlenk under argon to dissolve the PVAc macroinitiator and the solution was transferred in the high pressure stainless steel autoclave under an ethylene flux. The autoclave was pressurized at 500 bar by ethylene and heated at 80 °C using an oil bath for 24 hours while maintaining the ethylene pressure constant. After reaction, the autoclave was depressurized (a low ethylene flux was maintained) and 40 mg of TEMPO was added. The resulting mixture was evaporated under reduced pressure and then dried in an oven at 60 °C for 24 hours to yield the final block copolymer as a solid material.

The molecular parameters of the copolymer were determined by SEC in THF using PS as a calibration. The copolymer was analyzed by DSC. Mn is the number average molar mass, Mw is the weight average molar mass and Mp is the molar mass at the peak.

Table 1

| Sample | Mn (g/mol) | Mw/Mn | Mp (g/mol) |
|---|---|---|---|
| PVAc | 9000 | 1.08 | 10300 |
| Block copolymer | 12600 | 1.25 | 12000 (first peak; PVAc-b-PE)<br>22700 (second peak; PVAc-b-PE-b-PVAc) |

The degree of polymerization of PE is determined by $^1H$ NMR spectroscopy in $CDCl_3$ from the dried polymer by comparing the integrals of the methoxy groups ($CH_3O$-) ($I_{CH3O}$) at the $\alpha$-chain end at 3.15 ppm with the integral of all signals between 2.5 and 1 ppm that are assigned to -$CH_2$- of vinyl acetate unit, the -$CH_3$ of vinyl acetate unit and to the -$CH_2$-$CH_2$- repeating unit of ethylene, and substracting the contribution of the vinyl acetate unit to this integration. The equation to determine $DP_{PE}$ is:

$$DP_{PE} = (I_{(2.5\text{-}1ppm)}\text{-}(I_{CH(4.8ppm)} \times 5))/(I_{CH3O\ (4.8ppm)} \times 4/3)$$

In this case, $DP_{PE}$ = 24.

The absolute molar mass (Mn,abs expressed in g/mol) of the copolymer is obtained by the equation:

$$Mn,abs = DP_{PVAc} + (DP_{PE} \times M_E) + 140,$$

where $M_E$ is the molar mass of ethylene, thus 28 g/mol.

In this case, Mn,abs = 11140 g/mol

These $DP_{PE}$ and Mn,abs are for the polymer that is soluble in $CDCl_3$.

The SEC chromatogram is shown in Fig. 2 where V is the elution volume. The DSC analysis is shown in Fig. 3 where T is the temperature.

Example 2- Synthesis of poly(ethylene-vinyl acetate)-b-poly(ethylene) (EVA-b-PE) block copolymer in $CH_2Cl_2$ with first block prepared at 10 bar

2a. Synthesis of EVA first block at 10 bar.

A solution of organocobalt in $CH_2Cl_2$ (3.5 ml, 0.1136 M stock solution in $CH_2Cl_2$, $4x10^{-4}$mol) was introduced under argon in a purged 30 ml Schlenk tube and evaporated to dryness under reduced pressure at room temperature. Vinyl acetate (3.7 ml, 0.04 mol) was added under argon and the solution was transferred via cannula to a purged 30 ml stainless-steel autoclave under ethylene flux. The autoclave was pressurized to 10 bar of ethylene and heated at 40 °C using an oil bath for 4 hours while maintaining the ethylene pressure constant, and the reaction mixture was stirred magnetically at 500 rpm. After 4 hours an aliquot for SEC and NMR analysis was taken and the viscous solution transferred to a Schlenk flask and dried under vacuum at room temperature, and the flask was then filled with argon. Conversion in VAc = 20%. Molecular characteristics of EVA: Mn = 2,900 g/mol, PDI = 1.09). Composition of the copolymer: 16 mol% E et 84 mol% VAc.

Synthesis of EVA-b-PE block copolymer. The first EVA block (1g) was dissolved in 5 ml degassed $CH_2Cl_2$ in a Schlenk flask and transferred into a purged 15 ml stainless-steel highpressure autoclave. With the aid of a compressor, an ethylene pressure of 500 bar was applied and the reaction heated to 60 °C at 500 rpm. After 24 hours, the reactor was allowed to cool to room temperature, depressurised and a degassed solution of TEMPO (150 mg, $1\times10^{-3}$ mol; in 2-5mL $CH2Cl^2$) was introduced. A light-brown solution with precipitate was obtained which was dialysed in methanol (3.5 kDa regenerated cellulose tubing, Spectrum Labs). After drying at 40 °C under vacuum a white solid was obtained. This was analysed using NMR, DSC and TGA. Sample was not soluble in THF and not analysable in GPC.

The degree of polymerization of each block as determined by $^1H$-NMR at 100°C in tetrachloroethylene: DP: 1st block: VAc = 22, E = 13; 2nd block: E = 400. Mn abs = 13570 g/mol The NMR analysis at 100 °C in tetrachloroethylene is shown in Fig. 4.

The DSC analysis is shown in Fig. 5.

The TGA analysis is shown in Fig. 6.

Example 3- Synthesis of poly(ethylene-vinyl acetate)-b-poly(ethylene) (EVA-b-PE) block copolymer in dimethyl carbonate DMC with first block prepared at 50 bar

3a. Synthesis of EVA first block at 50 bar.

A solution of organocobalt in $CH_2Cl_2$ (15.5 ml, 0.07739 M stock solution in $CH_2Cl_2$, 1.2 mmol) was introduced under argon in a purged 30 ml Schlenk tube and evaporated to dryness under reduced pressure at room temperature. Vinyl acetate (11 ml, 0.12 mol) was added under argon and the solution was transferred via cannula to a purged 30 ml stainless-steel autoclave under ethylene flux. The autoclave was pressurized to 50 bar of ethylene and heated at 40 °C using an oil bath for 6 hours while maintaining the ethylene pressure constant, and the reaction mixture was stirred magnetically at 500 rpm. After 6 hours an aliquot for SEC and NMR analysis was taken and the viscous solution transferred to a Schlenk flask and dried under vacuum at room temperature, and the flask was then filled with argon. Conversion in VAc = 34 %. Molecular characteristics of EVA: Mn = 3,600 g/mol, PDI = 1.17. Composition of the copolymer from hight temperature $^1$H-NMR in TCE: 52 mol% E et 48 mol% VAc.

3b. Synthesis of EVA-b-PE block copolymer in DMC.

0.9 g of the first EVA block was dissolved in 5 ml of degassed DMC in a Schlenk flask and transferred into a purged 15 ml stainless-steel high pressure autoclave. With the aid of a compressor, an ethylene pressure of 500 bar was applied and the reaction heated to 60 °C at 500 rpm. After 24 hours, the reactor was allowed to cool to room temperature, depressurised and a degassed solution of TEMPO (150 mg, $1\times10^{-3}$) mol; in 2-5mL DMC) was introduced. A pink-brown solution was obtained which was dialysed in acetone (3.5 kDa regenerated cellulose tubing, Spectrum Labs). The molecular parameters of the copolymer were determined by SEC in THF using PS as a calibration. The copolymer was analyzed by DSC (see Fig. 7).

Table 2

| Sample | Mn (g/mol) | Mw/Mn | Mp (g/mol) |
|---|---|---|---|
| P(EVA) | 3,600 | 1.17 | 4,300 |
| Block copolymer | 4,300 | 4.26 | 8,400 (first peak; EVA-b-PE)<br>16,500 (second peak; EVA-b-PE-b-EVA) |

Example 4- Synthesis of poly(N-methyl N-vinyl acetamide)-b-poly(ethylene) block copolymer

4a. PNMVA-Co(acac)$_2$.

In a round bottom flask capped by a three-way stopcock and purged by three vacuum-argon cycles, 1 ml of the organocalt(III) stock solution in $CH_2Cl_2$ (0.231 M stock solution in $CH_2Cl_2$, 0.231 mmol) was introduced and then evaporated to dryness under reduced pressure. The residue was added with NMVA (0.959 g/mL, 6 ml, 5.75 g, 58 mmol) ([NMVA]/[Co] = 252, Mn th 100% = 25000 g/mol). After stirring for 7 h at 40°C, the NMVA conversion was measured by $^1$H NMR in $D_2O$ and by gravimetry (conv = 20%) and the molecular parameters of the PNMVA were analyzed by SEC DMF (Mn SEC DMF CAL PS = 4500 g/mol, Đ = 1.22; Mn SEC MultiAngleLightScattering DMF = 6500 g/mol, Đ = 1.1; dn/dc (mL/g) = 0.071). Unreacted NMVA was then removed under vacuum at room temperature to provide the PNMVA-Co(acac)$_2$. Degassed dimethyl carbonate (DMC, 8 ml) was added to solubilize PNMVA-Co(acac)$_2$ at room temperature under argon atmosphere.

4b. PNMVA-b-PE:

6 ml of the homogenous solution of PNMVA-Co(acac)$_2$ (6500 g/mol, 0.173 mmol) were transferred into a 15 ml stainless-steel autoclave under an ethylene atmosphere using a syringe. The autoclave was pressurized under the desired ethylene pressure (500 bar) and heated at 60 °C using an oil bath. The pressure was maintained manually during the polymerization and the reaction mixture was stirred magnetically at 500 rpm overnight (18 h). The reaction was stopped by depressurization of the reactor. The copolymer was quenched by the addition of a solution of 100 mg of TEMPO ($6.4 \times 10^{-4}$ mol) in 6ml of DMC. This solution is then precipitated in diethylether under vigorous stirring. The polymer is dried under vacuum at 60 °C overnight and weighted. The molecular parameters of the polymer (molar mass Mn and molar-mass distribution D) are determined by SEC in DMF using PS calibration. The copolymer was analyzed by $^1$H-NMR in trichloroethane (TCE) at room temperature.

PNMVA precursor: Mn SEC DMF CAL PS = 4500 g/mol, Mp SEC DMF CAL PS = 5900 g/mol, Đ = 1.22, Mn MALLS = Mn abs = 6500 g/mol, D MALLS = 1.1, dn/dc (mL/g) = 0.071.
PNMVA-b-PE Mn SEC DMF CAL PS = 6600 g/mol, Mp SEC DMF CAL PS = 7100 g/mol, Đ = 1.36
$^1$H-NMR: FPE = 0.42, FPNMVA = 0.58 ; where $F_{PE}$ = molar fraction of ethylene in the copolymer, $F_{PNMVA}$=molar fraction of NMVA in the copolymer.

$$DP_{PNMVA} = 65; DP_{PE} = 47$$

Fig. 8 shows the SEC of PNMVA and PNMVA-b-PE (before and after precipitation)
Fig. 9 shows the $^1$H-NMR of PNMVA-b-PE in TCE.

Example 5: Synthesis of poly(vinyl acetate)-b-poly(ethylene) block copolymer at different temperatures during the polymerization of ethylene.

Example 1a was repeated except that 40 ml of the organocobalt stock solution, a 250ml flask, and 65 ml of VAc (60.35 g, $7.02 \times 10^{-1}$ mol) were used instead of the corresponding volumes used in Example 1. After 2.5h, a PVAc was formed having an Mn as determined by SEC of 8200 g.mol$^{-1}$, a low dispersity (D = 1.08) and a conversion of 46%.
Example 1 b was repeated except that the copolymer was quenched by the addition of a solution of 100 mg of TEMPO ($6.4 \times 10^{-4}$ mol) in 6ml of DMC instead of 40 mg. A dark slurry mixture was obtained precipitated in cold heptane under vigorous stirring. The clear solution was removed from the vial and the polymer was dried like in example 1 b. The copolymer was finally analyzed by $^1$H NMR spectroscopy in tetrachloroethane at 100 °C and the molecular parameters of the polymer (molar mass Mn and molar-mass distribution D) by SEC in THF using polystyrene calibration. Yields and SEC results are summarized in Table 3.
Different reaction temperatures (60, 80 and 100 °C) and reaction times (4, 8, 24 h) were investigated for the block copolymerization, and results are collected in Table 3. For all experiments, the SEC chromatogram of PVAc was shifted towards the higher molar mass side, in line with the successful chain extension with ethylene. Although a bimodal distribution was observed, the dispersity of the copolymer was low (1.20 ≤ Đ ≤ 1.40), indicating that each separate peak presents a remarkable low dispersity (Đ ≤ 1.1 by peak deconvolution). The yield was higher at 60 °C and decreased with the polymerization temperature. Polymerizations seemed to stop between 4 and 8h for all tested conditions, no drastic change in the conversion being observed after 8h of reaction. Assuming that the bimodality results from coupling reactions, the final sample thus contained a mixture of PVAc-b-PE diblock and PVAc-b-PE-b-PVAc triblock copolymers.
The $^1$H NMR spectra of the PVAc first block was compared with that of the PVAc-b-PE copolymer. All characteristic peaks of repeating units of the two blocks were observed, as well as the methoxy group of the $\alpha$-chain end at 3.15 ppm. Based on this chain-end, the polymerization degree (DP) of each block and the molar mass of PE were calculated, and the values are summarized in Table 3. Except for the polymerization carried out at 80 °C after 4h, the molar mass of PE increased with the yield, reaching about 1300 g.mol$^{-1}$ (DP = 45) after 8h of reaction.
The differential scanning calorimetry (DSC) analysis of these samples confirmed the presence of a PE segment in the copolymers and notably evidenced a Tm characteristic of PE between 103 to 110 °C with crystallinity ranging from 1.8 to 7.6 %. Results are summarized in Table 4.

Table 3. Block copolymerization of ethylene by CMRP from $PVAc_{8.2k}$-$Co(acac)_2$ macroinitiator. Reaction conditions and macromolecular parameters[a]

| BCP | T[°C] | Time [h] | Yield[b] [mg] | Mn, NMR PE[c] [g/mol] | Dp PE[c] | Mn, GLOBAL [g/mol][d] | Đ GLOBAL[d] | Mp 1 [g/mol] (Đ)[d] | Mp 2, [g/mol] (Đ)[d] |
|---|---|---|---|---|---|---|---|---|---|
| 1 | 60 | 4 | 713 | 1028 | 37 | 11400 | 1.23 | 10200 (1.1) | 19900 (1.06) |
| 2 | | 8 | 983 | 1266 | 45 | 12700 | 1.41 | 11000 (1.08) | 21300 (1.11) |
| 3 | | 24 | 938 | 1264 | 45 | 12400 | 1.35 | 10600 (1.08) | 20800 (1.11) |
| 4 | 80 | 4 | 547 | 1903 | 68 | 13500 | 1.24 | 11200 (1.07) | 19700 (1.07) |
| 5 | | 8 | 800 | 1095 | 39 | 11600 | 1.20 | 9900 (1.06) | 18400 (1.06) |

(continued)

| BCP | T[°C] | Time [h] | Yield[b] [mg] | Mn, NMR PE[c] [g/mol] | Dp PE[c] | Mn, GLOBAL [g/mol][d] | Đ GLOBAL[d] | Mp 1 [g/mol] (Đ)[d] | Mp 2, [g/mol] (Đ)[d] |
|---|---|---|---|---|---|---|---|---|---|
| 6 | | 24 | 890 | 1107 | 40 | 11900 | 1.20 | 10100 (1.06) | 18600 (1.05) |
| 7 | 100 | 4 | 520 | 899 | 32 | 12800 | 1.19 | 10500 (1.07) | 18800 (1.06) |
| 8 | | 8 | 833 | 1043 | 37 | 11900 | 1.19 | 10100 (1.05) | 18400 (1.05) |
| 9 | | 24 | 716 | 813 | 29 | 11600 | 1.21 | 10100 (1.06) | 18600 (1.05) |

[a]Conditions: R-PVAc-Co(acac)$_2$ (2g in dried state, 8200 g.mol$^{-1}$, D = 1.08) was used as macroinitiator for the block copolymerization of ethylene in 6 mL of DMC with a $P_{ethylene}$ = 500 bar. [b]Corresponding to the final mass of BCP after purification by precipitation. [c]Calculated from the integral of $CH_3O$- chain-end of the purified copolymer by $^1$H-NMR. [d]Determined by SEC-THF.

Table 4. Thermal properties of BCP 1-9.

| BCP | T(°C) | Time(h) | DSC Tg PE [°C] | DSC Tm PE [°C] | CryStPE[a] [%] |
|---|---|---|---|---|---|
| 1 | 60 | 4 | 39.13 | 103.7 | 4.1 |
| 2 | | 8 | 39.78 | 103.27 | 5.2 |
| 3 | | 24 | 39.01 | 103.41 | 5.4 |
| 4 | 80 | 4 | 39 | 106.4 | 7.6 |
| 5 | | 8 | 36.4 | 107.3 | 2.9 |
| 6 | | 24 | 37.47 | 108.1 | 4.2 |
| 7 | 100 | 4 | 34.76 | 105.9 | 2.6 |
| 8 | | 8 | 37.27 | 109.7 | 3.1 |
| 9 | | 24 | 37.55 | 108.48 | 1.8 |

[a]Determined by DSC with the equation: Crystallinity (%) = ($\Delta$Hf measured / $\Delta Hf_\infty$) x 100, where $\Delta Hf_\infty$ = 293 Jg$^{-1}$.

Interestingly, a low intense peak located at the high molar mass was also observed on all SEC chromatograms, indicating the presence of species with a large hydrodynamic volume, which might be attributed to some aggregates or micelles. Indeed, PVAc block is soluble in the solvent for SEC analysis (tetrahydrofurane or THF) in contrast to PE, thus suggesting the possible micellization of the copolymer. Dynamic light scattering (DLS) analysis of the THF solution of the copolymer used for SEC was carried out. Nanobjects with a size of about 153 nm (dispersity = 0.166) were observed. Since PE segments having a molar mass of about 1300 g.mol$^{-1}$ are insoluble in DMC at room temperature, we suspected that micellization could also occur in the polymerization medium. For this reason, we also analyzed the crude solution of the PVAc-b-PE block copolymer (sample BCP 1, Table 3) collected after depressurization of the reactor. A drop of the crude turbid solution was first diluted in 1 ml of fresh DMC, then the solution was deposited on a grid TEM, dried and was then observed by TEM. Spherical particles with a mean diameter of 122 ($\pm$ 24 nm) were also observed (Image below). All these observations are in line with the presence of block copolymers.

It is to be understood that although preferred embodiments, specific constructions and configurations, as well as materials, have been discussed herein for block copolymers according to the present invention, various changes or modifications in form and detail may be made without departing from the scope of this invention. For example, any formulas given above are merely representative of procedures that may be used. Steps may be added or deleted to methods described within the scope of the present invention.

## Claims

1. Process for the preparation of a block copolymer comprising a polyethylene block and a block formed of the polymerization of one or more vinyl monomers, at least 50 mol% of which being selected from the list consisting of ethylene, vinyl esters, non-conjugated N-vinyl monomers, acrylonitrile, (meth)acrylates and (meth)acrylamides, at least one of said one or more vinyl monomers not being ethylene, the process comprising:

    a. Polymerizing either ethylene as sole monomer or the one or more vinyl monomers in presence of an organic cobalt complex and optionally an initiator for radical polymerization, thereby forming a macroinitiator comprising a first polymer block formed either of polyethylene or of the polymerized one or more vinyl monomers,
    b. Contacting the macroinitiator with either

        i. The one or more vinyl monomers, if ethylene was polymerized in step a, or
        ii. ethylene, if the one or more vinyl monomers were polymerized in step a,

    thereby forming a second polymer block formed either of the polymerized one or more vinyl monomers or of polyethylene, attached to the first polymer block, and thereby forming the block copolymer, wherein forming the polyethylene block is performed under a pressure of at least 300 bar.

2. The process according to claim 1, wherein the block copolymer formed comprises:

    i) a polyethylene block attached to one or two polymer blocks formed of the polymerized one or more vinyl monomers, if step a involves the polymerization of the one or more vinyl monomers, at least one of them not being ethylene, or
    ii) a polymer block formed of the polymerized one or more vinyl monomers, at least one of them not being ethylene, attached to one or two polyethylene blocks if step a involves the polymerization of ethylene.

3. The process according to any one of the preceding claims, wherein forming the polyethylene block is performed in presence of a liquid media selected from the list consisting of dichloromethane, dimethyl carbonate, diethyl carbonate, a dichlorobenzene, and 1,2,4-trichlorobenzene.

4. The process according to any one of claims 1 to 3, wherein in step a, the one or more monomers, at least one of them not being ethylene, is polymerized in presence of the organic cobalt complex and optionally the initiator for radical polymerization, thereby forming the macroinitiator comprising a first polymer block formed of the polymerized one or more vinyl monomers, at least one of them not being ethylene.

5. The process according to any one of the preceding claims, wherein the one or more vinyl monomers, at least one of them not being ethylene, are a single vinyl monomer and the block copolymer comprises a polyethylene block and a block formed of the homopolymerization of the single vinyl monomer other than ethylene.

6. The process according to any one of the preceding claims, wherein the at least one vinyl monomer, not being ethylene, comprises vinyl acetate.

7. The process according to any one of the preceding claims, wherein the organic cobalt complex has for general formula R-Co(acac)$_2$ wherein R is selected from -(CH(OAc)-CH$_2$)$_n$-C(CH$_3$)(CN)-CH$_2$-C(CH$_3$)$_2$(OCH$_3$) and -CH$_2$X, wherein $n < 10$, acac stands for an acetylacetonate group, OAc stands for an acetoxy group, and X stands for an halogen group.

8. The process according to any one of the preceding claims, wherein forming the polyethylene block is performed at a temperature of from 30 to 200°C, preferably from 60 to 100°C.

9. A block copolymer comprising a polyethylene block attached to a block obtained from the polymerisation of one or more vinyl monomers, selected from the list consisting of ethylene, vinyl esters, non-conjugated N-vinyl monomers, acrylonitrile, (meth)acrylates, (meth)acrylamides, and hydrolysis products thereof, at least one of the one or more vinyl monomers not being ethylene.

10. The block copolymer according to claim 9, wherein the polyethylene block comprises at least 25 repeat units as determined by $^1$H NMR.

**11.** The block copolymer according to claim 9 or claim 10, having an absolute number average molecular mass of at least 5000 g/mol.

**12.** The block copolymer according to any one of claims 9 to 11, having a polydispersity of less than 1.5.

**13.** The block copolymer according to any one of claims 9 to 12, having a bimodal distribution.

**14.** The block copolymer according to any one of claims 9 to 13 being linear.

**15.** The block copolymer according to any one of claims 9 to 14, comprising chains selected from the list consisting of polyethylene-b-poly(vinyl alcohol), polyethylene-b-poly(vinyl alcohol)-b-polyethylene, poly(vinyl alcohol)-b-polyethylene-b-poly(vinyl alcohol), polyethylene-b-poly(ethylene-vinyl alcohol), polyethylene-b-poly(ethylene-vinyl alcohol)-b-polyethylene, poly(ethylene-vinyl alcohol)-b-polyethylene-b-poly(ethylenevinyl alcohol), polyethylene-b-poly(acrylic acid), polyethylene-b-poly(acrylic acid)-b-polyethylene, poly(acrylic acid)-b-polyethylene-b-poly(acrylic acid), polyethylene-b-poly(vinyl amine), polyethylene-b-poly(vinyl amine)-b-polyethylene, poly(vinyl amine)-b-polyethylene-b-poly(vinyl amine), polyethylene-b-poly(vinyl acetate), polyethylene-b-poly(vinyl acetate)-b-polyethylene, poly(vinyl acetate)-b-polyethylene-b-poly(vinyl acetate), polyethylene-b-poly(N-Methyl-N-vinylacetamide), polyethylene-b-poly(N-Methyl-N-vinylacetamide)-b-polyethylene, poly(N-Methyl-N-vinylacetamide)-b-polyethylene-b-poly(N-Methyl-N-vinylacetamide), polyethylene-b-poly(ethylene-vinyl acetate), polyethylene-b-poly(ethylene-vinyl acetate)-b-polyethylene, and poly(ethylene-vinyl acetate)-b-polyethylene-b-poly(ethylene-vinyl acetate).

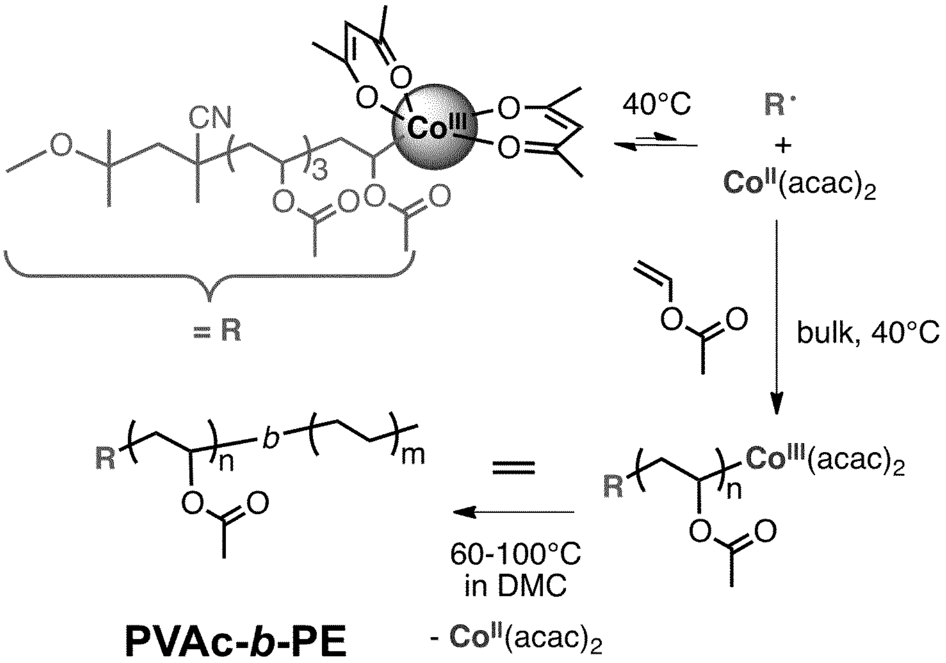
40°C
R•
+
Co^II(acac)2
bulk, 40°C
60-100°C
in DMC
- Co^II(acac)2
PVAc-b-PE

# FIG. 1

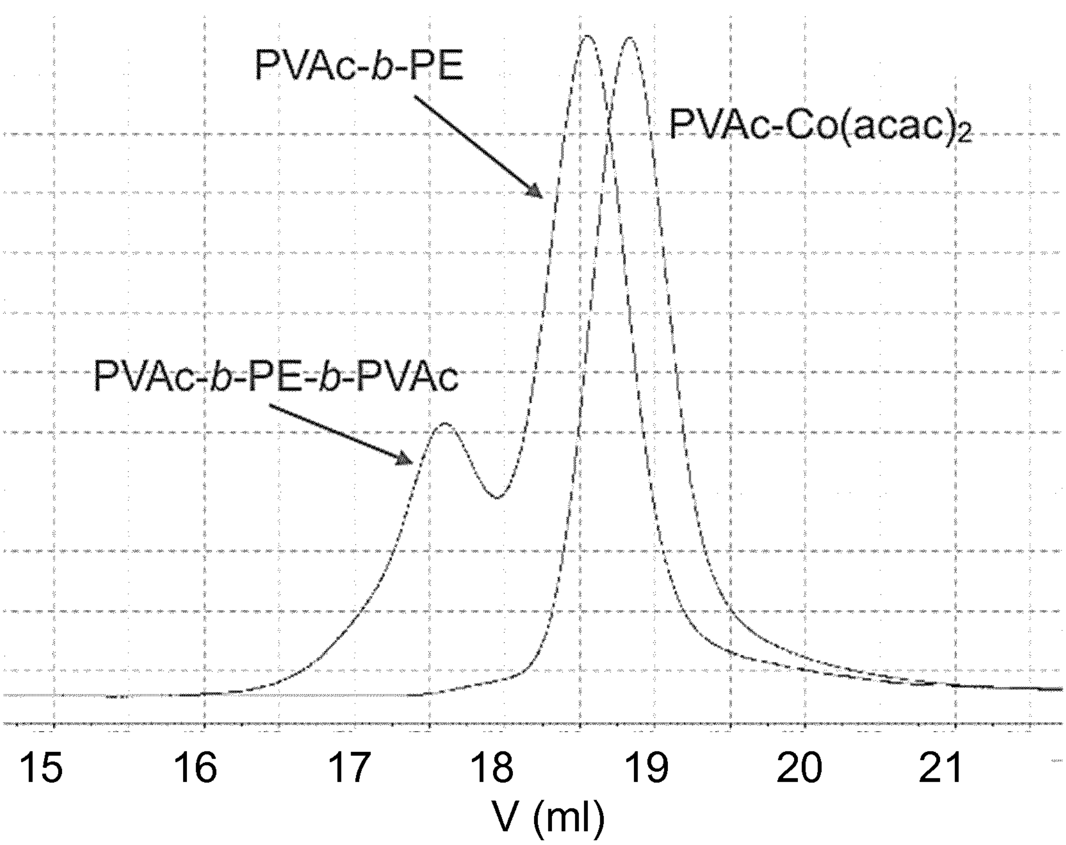
PVAc-b-PE
PVAc-Co(acac)2
PVAc-b-PE-b-PVAc
15
16
17
18
19
20
21
V (ml)

# FIG. 2

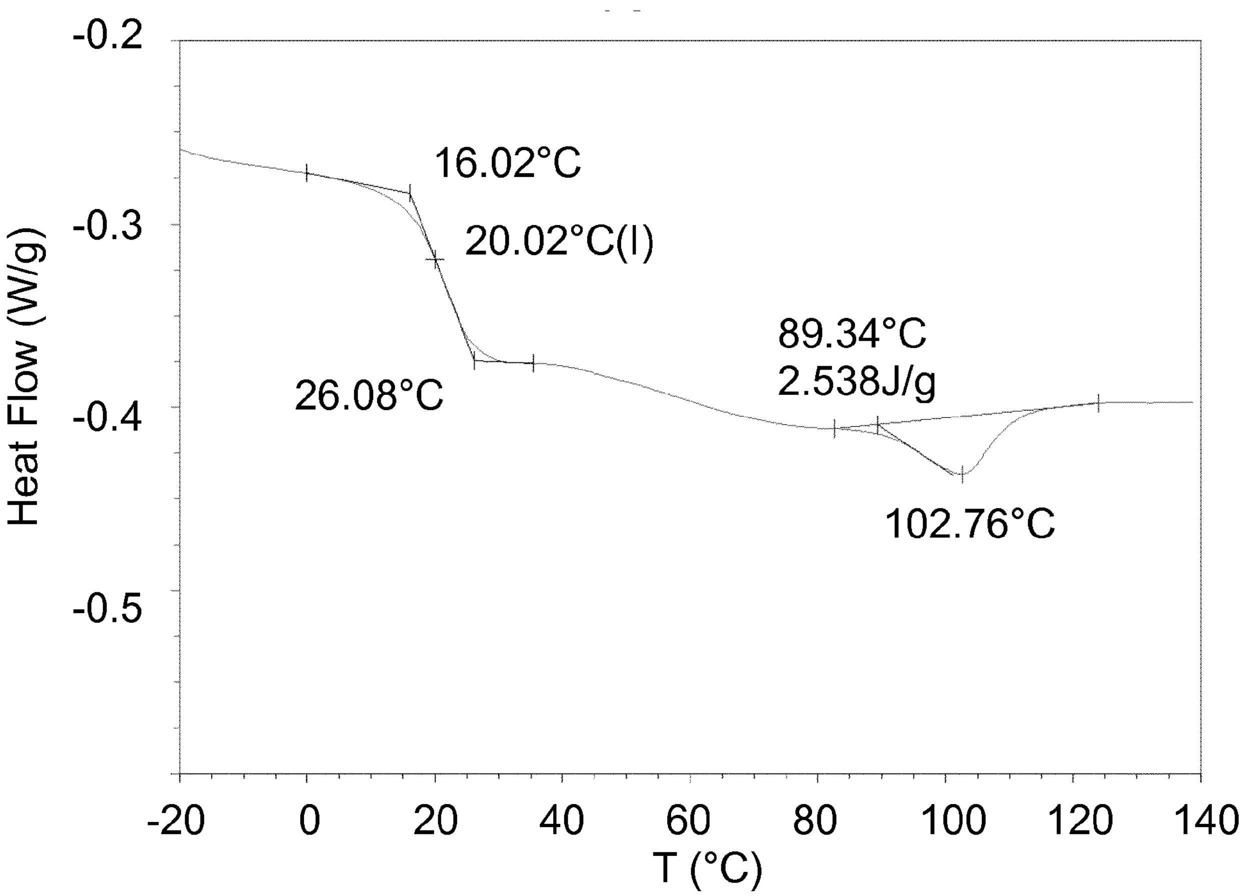
-0.2
-0.3
-0.4
-0.5
Heat Flow (W/g)
16.02°C
20.02°C(I)
26.08°C
89.34°C
2.538J/g
102.76°C
-20
0
20
40
60
80
100
120
140
T (°C)

FIG. 3

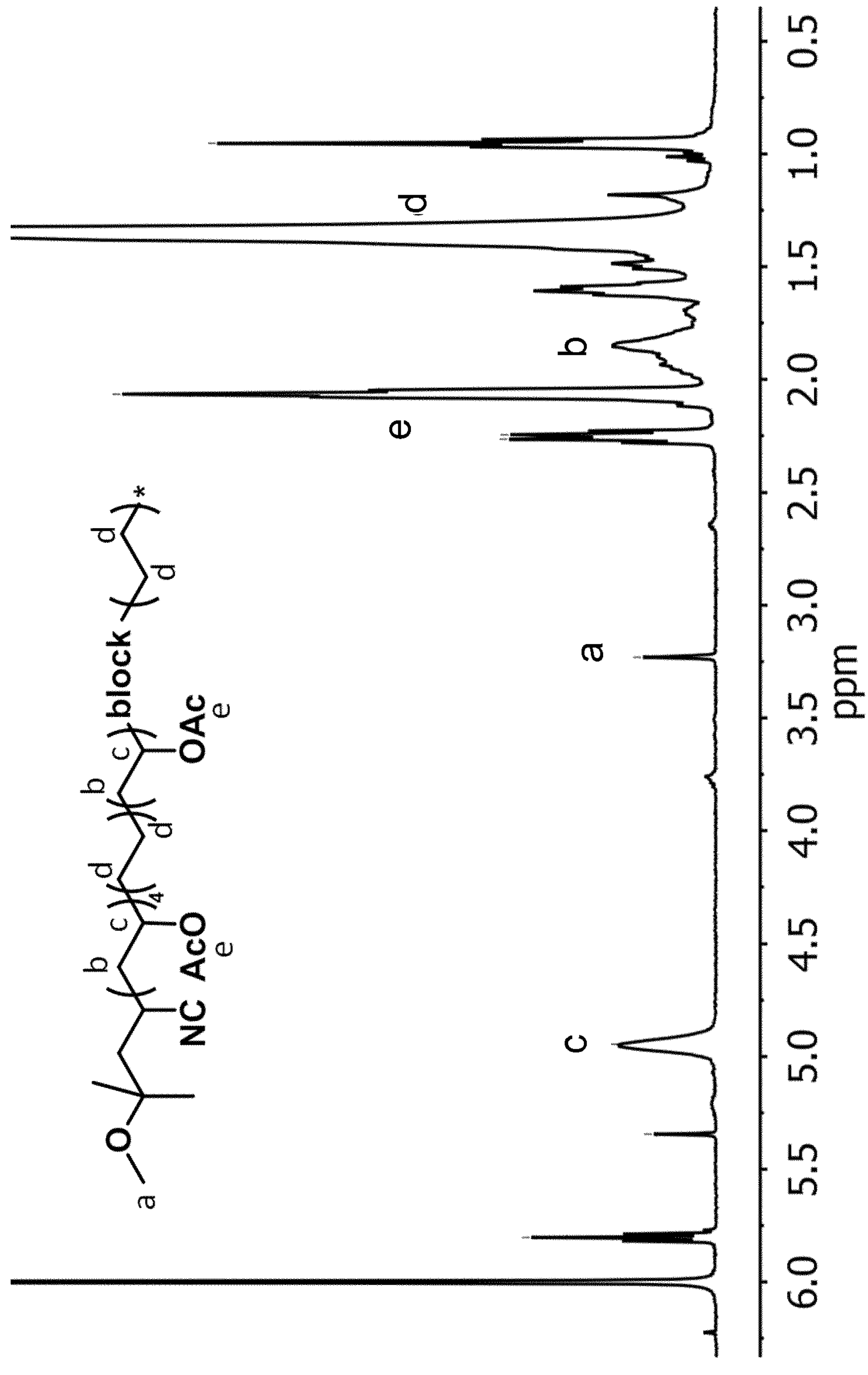


FIG. 4

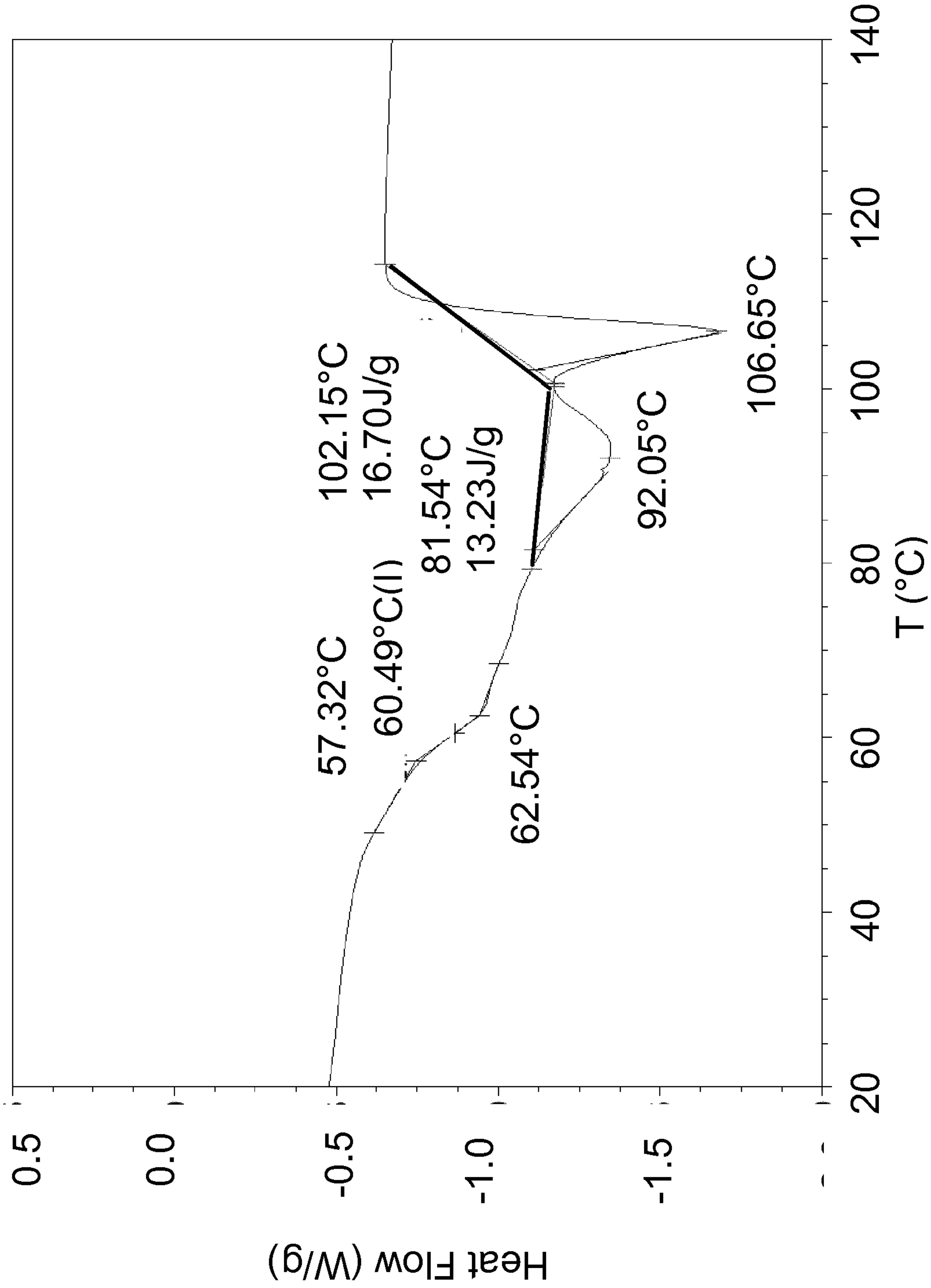
Heat Flow (W/g)
0.5
0.0
-0.5
-1.0
-1.5
T (°C)
20
40
60
80
100
120
140
57.32°C
60.49°C(I)
62.54°C
81.54°C
13.23J/g
102.15°C
16.70J/g
92.05°C
106.65°C

FIG. 5

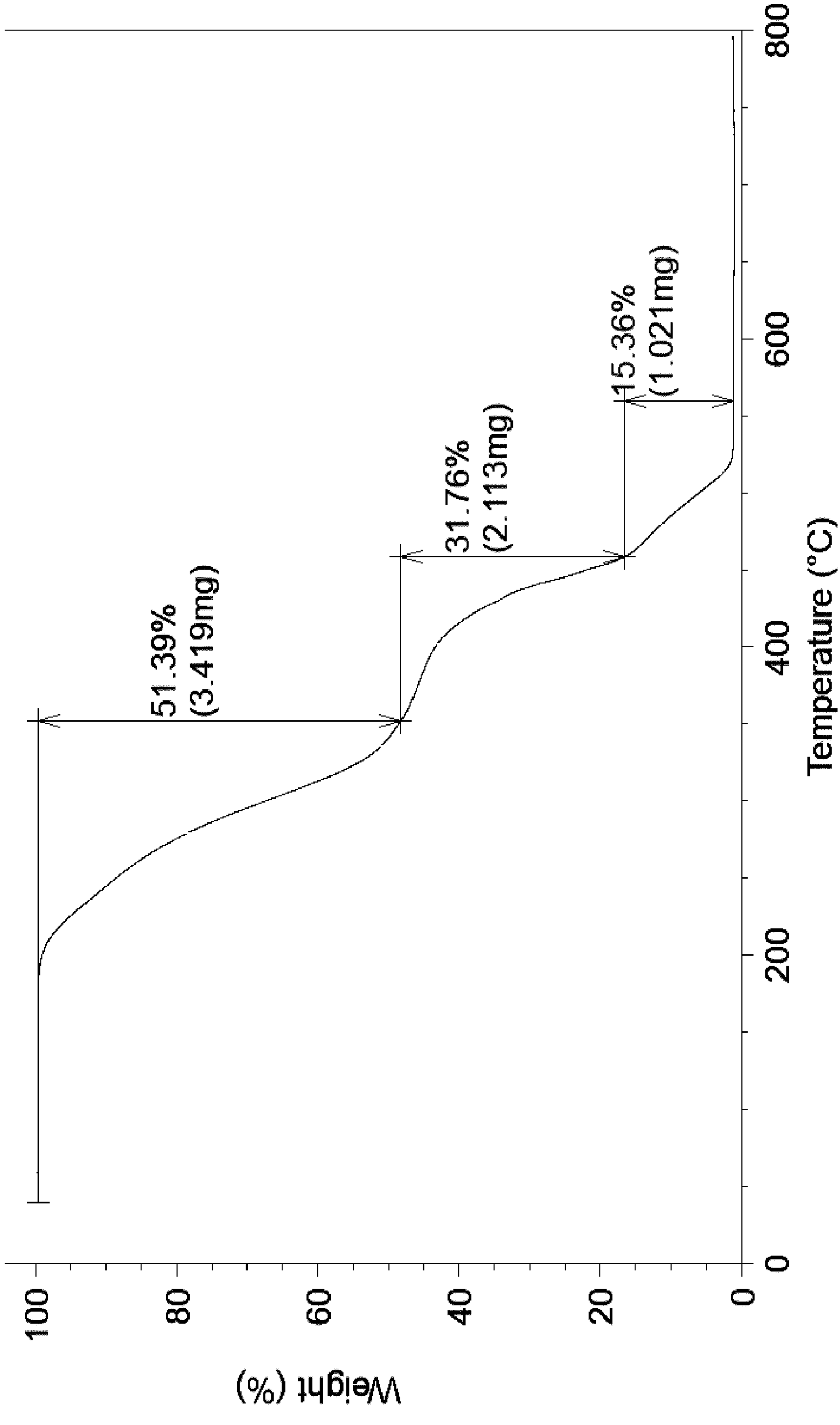

Weight (%)
100
80
60
40
20
0
Temperature (°C)
0
200
400
600
800
51.39%
(3.419mg)
31.76%
(2.113mg)
15.36%
(1.021mg)


FIG. 6

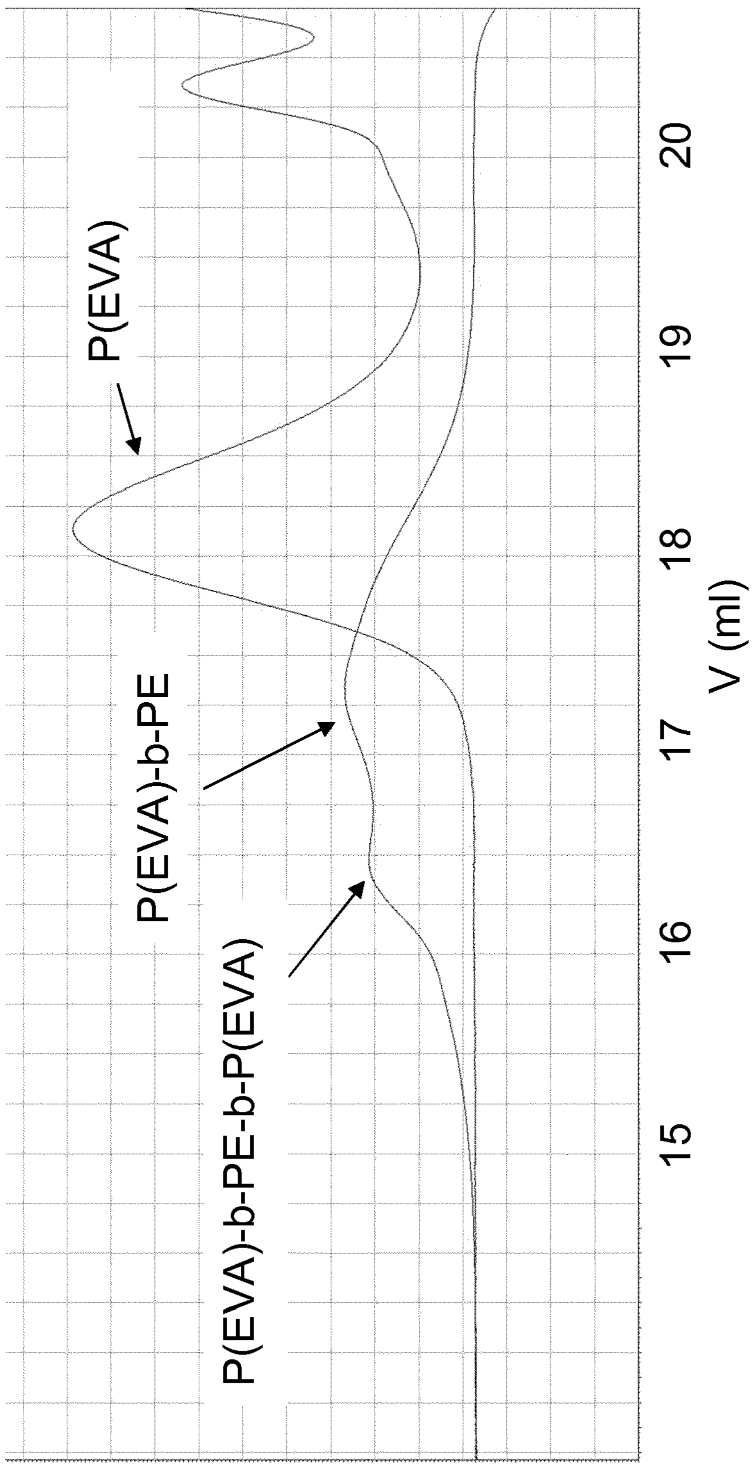


FIG. 7

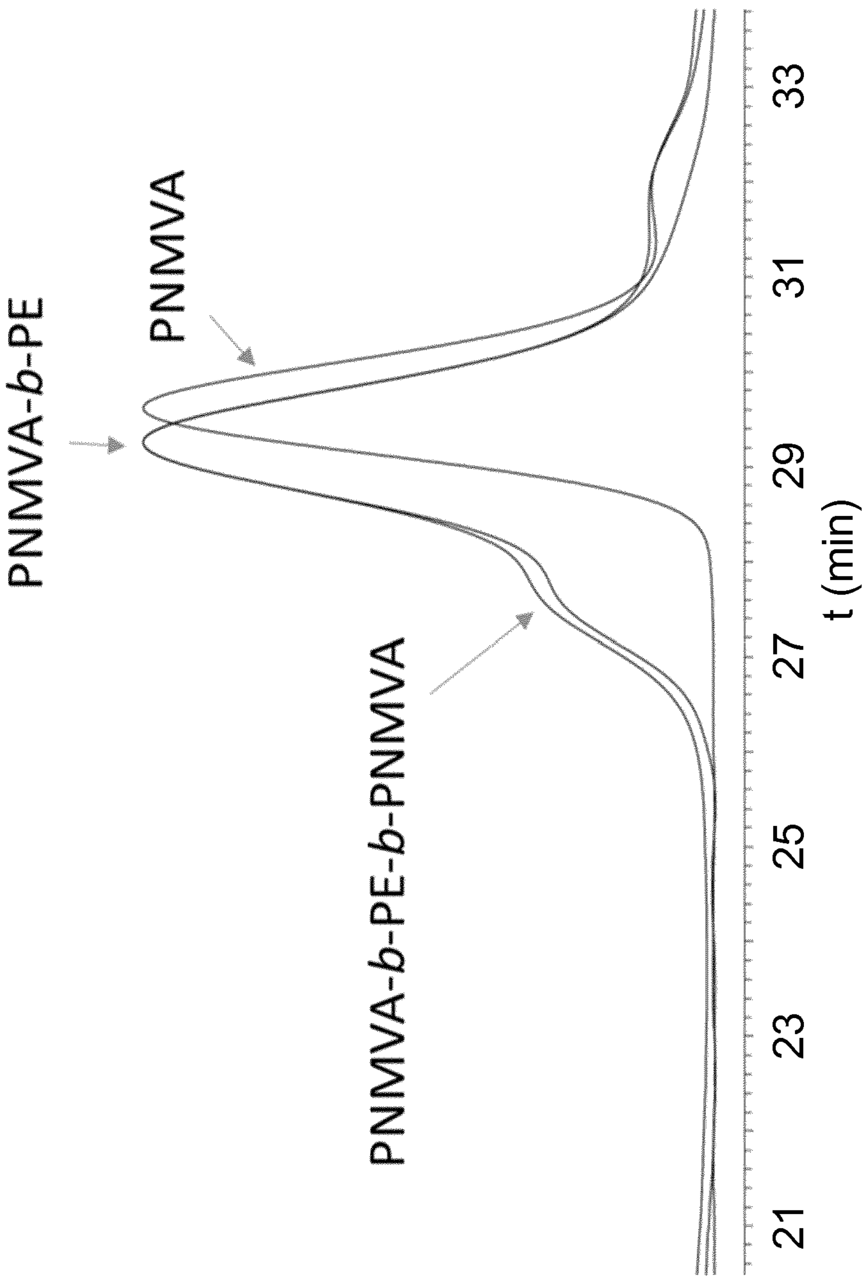


FIG. 8

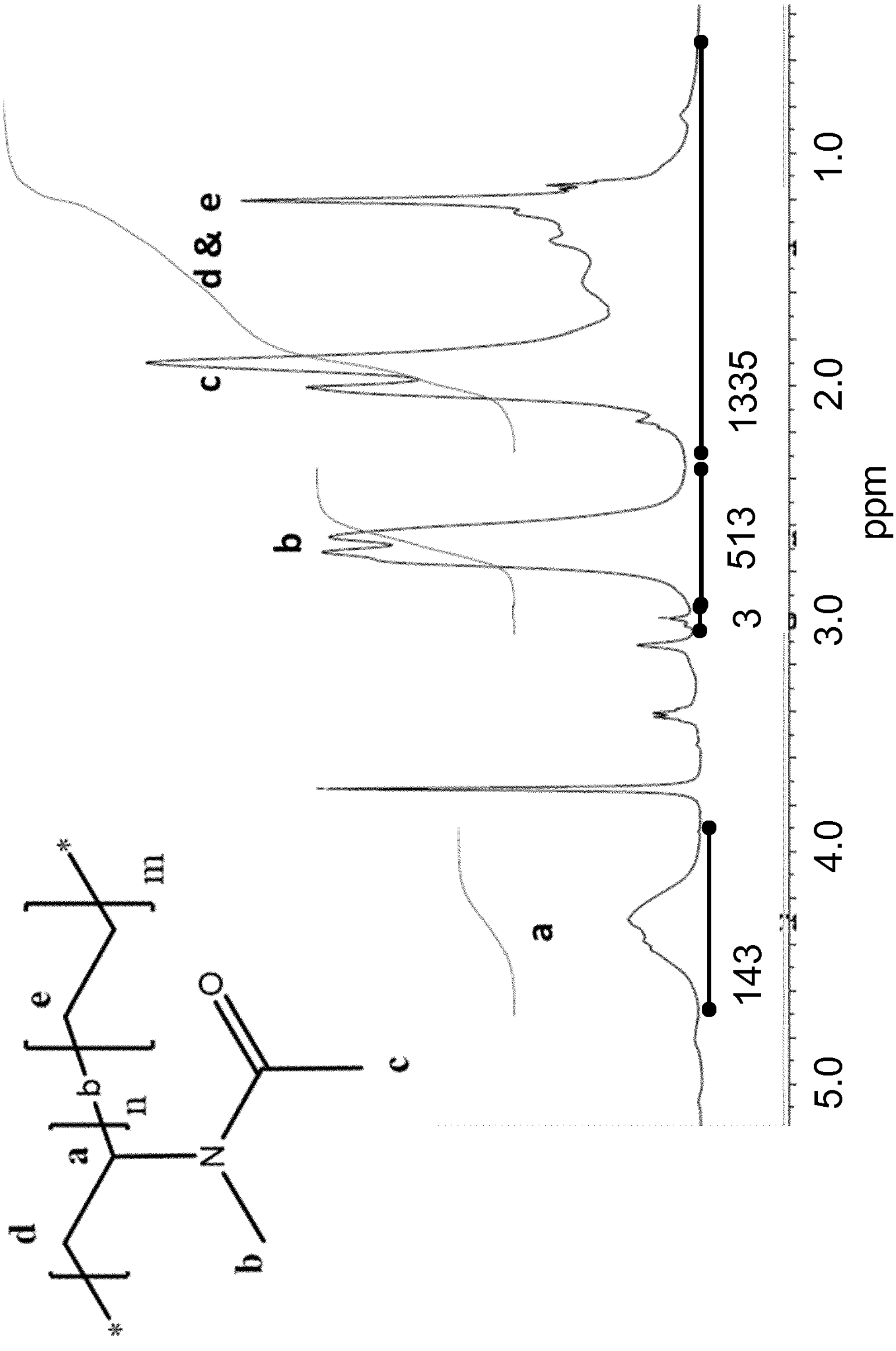


FIG. 9

Europäisches Patentamt
European Patent Office
Office européen des brevets

# EUROPEAN SEARCH REPORT

Application Number
EP 17 20 8574

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/083783 A2 (CENTRE NAT RECH SCIENT [FR]; UNIV CLAUDE BERNARD LYON [FR]) 13 June 2013 (2013-06-13) | 9-11,15 | INV. C08F293/00 C08F4/80 C08F4/04 C08F210/02 C08F218/08 C08F220/56 |
| A | * examples 37, 39, 41, 43; tables 3, 4 * ----- | 1-8, 12-14 | |
| X | US 3 277 210 A (MIRABILE FRANK A ET AL) 4 October 1966 (1966-10-04) | 9,10,14, 15 | |
| A | * claim 1; example 1 * ----- | 1-8, 11-13 | |
| X | US 3 450 795 A (LANGER ARTHUR W JR) 17 June 1969 (1969-06-17) | 9-11,14, 15 | |
| A | * column 5, line 5 - line 9; example 4 * ----- | 1-8,12, 13 | |
| A | RAYNA BRYASKOVA ET AL: "Copolymerization of vinyl acetate with 1-octene and ethylene by cobalt-mediated radical polymerization", JOURNAL OF POLYMER SCIENCE, PART A: POLYMER CHEMISTRY, vol. 45, no. 12, 10 May 2007 (2007-05-10), pages 2532-2542, XP055480203, ISSN: 0887-624X, DOI: 10.1002/pola.21963 * the whole document * ----- | 1-15 | TECHNICAL FIELDS SEARCHED (IPC) C08F |

-/--

The present search report has been drawn up for all claims

4

| Place of search | Date of completion of the search | Examiner |
|---|---|---|
| Munich | 4 June 2018 | Luka, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 17 20 8574

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ANTHONY KERMAGORET ET AL: "Precision design of ethylene- and polar-monomer-based copolymers by organometallic-mediated radical polymerization", NATURE CHEMISTRY, vol. 6, no. 3, 26 January 2014 (2014-01-26), pages 179-187, XP055480238, London ISSN: 1755-4330, DOI: 10.1038/nchem.1850 * the whole document * ----- | 1-15 | |
| A | ANTOINE DEBUIGNE ET AL: "Mechanistic Insights into the Cobalt-Mediated Radical Polymerization (CMRP) of Vinyl Acetate with Cobalt(III) Adducts as Initiators", CHEMISTRY - A EUROPEAN JOURNAL, vol. 14, no. 13, 18 April 2008 (2008-04-18), pages 4046-4059, XP055480241, ISSN: 0947-6539, DOI: 10.1002/chem.200701867 * Results and Discussion; page 4047 * ----- | 1-15 | |
| | | | TECHNICAL FIELDS SEARCHED (IPC) |

The present search report has been drawn up for all claims

4

| Place of search | Date of completion of the search | Examiner |
|---|---|---|
| Munich | 4 June 2018 | Luka, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO. EP 17 20 8574

This annex lists the patent family members relating to the patent documents cited in the above-mentioned European search report. The members are as contained in the European Patent Office EDP file on
The European Patent Office is in no way liable for these particulars which are merely given for the purpose of information.

04-06-2018

| Patent document cited in search report | Publication date | Patent family member(s) | Publication date |
|---|---|---|---|
| WO 2013083783 A2 | 13-06-2013 | FR 2983860 A1<br>WO 2013083783 A2 | 14-06-2013<br>13-06-2013 |
| US 3277210 A | 04-10-1966 | NONE | |
| US 3450795 A | 17-06-1969 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **S. L. AGGARWAL ; O. J. SWEETING.** *Chem. Rev.,* 1957, vol. 57, 665-742
- **M. GHIASS ; R. A. HUTCHINSON.** *Polym. React. Eng.,* 2003, vol. 11, 989-1015
- **A. DEBUIGNE ; C. JEROME ; C. DETREMBLEUR.** *Polymer,* 2017, vol. 115, 285-307
- **A. KERMAGORET ; A. DEBUIGNE ; C. JÉRÔME ; C. DETREMBLEUR.** *Nat. Chem.,* 2014, vol. 6, 179-187
- **J. DEMARTEAU ; A. KERMAGORET ; C. JEROME ; C. DETREMBLEUR ; A. DEBUIGNE.** *ACS Symp. Ser.,* 2015, vol. 1188, 47-61
- *Chem. Eur. J.,* 2008, vol. 14, 4046-4059